(19) **Europäisches Patentamt**
**European Patent Office**
**Office européen des brevets**

(11) **EP 4 390 649 A1**

(12) **EUROPEAN PATENT APPLICATION**
published in accordance with Art. 153(4) EPC

(43) Date of publication:
**26.06.2024 Bulletin 2024/26**

(21) Application number: **22882526.1**

(22) Date of filing: **16.09.2022**

(51) International Patent Classification (IPC):
**G06F 3/06** $^{(2006.01)}$

(52) Cooperative Patent Classification (CPC):
**G06F 3/06; G06F 12/0877;** Y02D 10/00

(86) International application number:
**PCT/CN2022/119444**

(87) International publication number:
**WO 2023/065915 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2021 CN 202111236363**

(71) Applicant: **Huawei Technologies Co., Ltd.
Shenzhen, Guangdong 518129 (CN)**

(72) Inventors:
• **SHI, Liang
Shanghai 200062 (CN)**
• **GU, Ben
Shanghai 200062 (CN)**
• **MAO, Jingjing
Shenzhen, Guangdong 518129 (CN)**
• **YI, Jian
Shenzhen, Guangdong 518129 (CN)**

(74) Representative: **Gill Jennings & Every LLP
The Broadgate Tower
20 Primrose Street
London EC2A 2ES (GB)**

(54) **STORAGE METHOD AND APPARATUS, DEVICE, AND STORAGE MEDIUM**

(57) This application provides a storage method and apparatus, a device, and a storage medium, and relates to the field of electronic devices. In the method, a size of maximum available cache space of a storage device may be adjusted based on overall space usage of the storage device. By controlling the maximum available cache space of the storage device, overall space utilization of the storage device can be reduced, a size of available single-level cell cache space in the storage device can be maintained, and read/write performance of the storage device can be improved.

```
┌─────────────────────────────────────────────┐
│ Obtain overall space usage of a hybrid SSD   │ ⎫ S301
│ with a dynamic SLC capacity                  │ ⎭
└─────────────────────────────────────────────┘
                      │
                      ▼
┌─────────────────────────────────────────────┐
│ Adjust maximum available cache space of the  │ ⎫ S302
│ hybrid SSD with the dynamic SLC capacity     │ ⎭
│ based on the overall space usage             │
└─────────────────────────────────────────────┘
```

FIG. 3

EP 4 390 649 A1

**Description**

This application claims priority to Chinese Patent Application No. 202111236363.1, filed with the China National Intellectual Property Administration on October 22, 2021 and entitled "STORAGE METHOD AND APPARATUS, DEVICE, AND STORAGE MEDIUM", which is incorporated herein by reference in its entirety.

**TECHNICAL FIELD**

Embodiments of this application relate to the field of electronic devices, and in particular, to a storage method and apparatus, a device, and a storage medium.

**BACKGROUND**

A solid state flash storage device is also referred to as a solid state drive, a solid state disk (solid state disk, SSD), or the like. With rapid progress of flash storage technologies and increasing storage requirements, storage density of the SSD gradually increases. For example, a use mode of a storage unit of the SSD is gradually increased from a single-level cell (single-level cell, SLC) mode to a double-level cell (multi-level cell, MLC) mode, a triple-level cell (triple-level cell, TLC) mode, a quad-level cell (quad-level cell, QLC) mode, and the like. The increase of the storage density of the SSD may make a capacity of the SSD larger and costs lower, but input/output (input/output, I/O) performance (namely, read/write performance) of the SSD is greatly reduced.

Currently, the SSD uses a manner of mixing a high-speed medium and a low-speed medium, so that the I/O performance of the SSD can be optimized. An SSD that uses the manner of mixing a high-speed medium and a low-speed medium may be referred to as a hybrid SSD. The hybrid SSD may include a hybrid SSD with a static SLC capacity, and a hybrid SSD with a dynamic SLC capacity. Storage space of the hybrid SSD with the static SLC capacity may include: a QLC area and a static SLC area. A size of the static SLC area is fixed. Storage space of the hybrid SSD with the dynamic SLC capacity may include: a QLC area, a dynamic SLC area, and a static SLC area. A size of the static SLC area is also fixed. As overall space usage of the hybrid SSD with the dynamic SLC capacity gradually increases, some areas in the dynamic SLC area may be switched to work in a multi-level cell mode, and the dynamic SLC area gradually decreases.

For the hybrid SSD with the dynamic SLC capacity, when some areas in the dynamic SLC area are switched to work in the multi-level cell mode, a capacity of the hybrid SSD with the dynamic SLC capacity increases, but I/O performance of the hybrid SSD with the dynamic SLC capacity decreases.

**SUMMARY**

Embodiments of this application provide a storage method and apparatus, a device, and a storage medium. In the method, a size of maximum available cache space of a storage device may be adjusted based on overall space usage of the storage device. By controlling the maximum available cache space of the storage device, overall space utilization of the storage device can be reduced, a size of available single-level cell cache space in the storage device can be maintained, and read/write performance of the storage device can be improved.

According to a first aspect, an embodiment of this application provides a storage method, where the method includes: obtaining overall space usage of a storage device, where the storage device includes working in a multi-level cell area, a dynamic single-level cell area, and a static single-level cell area, and the overall space usage is determined based on a size of storage space of the storage device and a size of a used area in the storage space of the storage device; and adjusting a size of maximum available cache space of the storage device based on the overall space usage, where the maximum available cache space is maximum storage space that is allowed to be occupied by cached data when the cached data is stored in the storage device.

When the overall space usage is first overall space usage, a size of the dynamic single-level cell area is a fourth capacity, and an adjusted size of the maximum available cache space is a first value; or when the overall space usage is second overall space usage, the size of the dynamic single-level cell area is a fifth capacity, and the adjusted size of the maximum available cache space is a second value, where the second overall space usage is greater than the first overall space usage, the fifth capacity is less than the fourth capacity, and the second value is less than the first value.

In the storage method, by controlling the maximum available cache space, the overall space usage of the storage device can be reduced, a size of available SLC cache space can be maintained, and I/O performance of the storage device can be improved.

In a possible implementation, when the overall space usage is less than or equal to a first threshold, the size of the maximum available cache space is equal to a first capacity, and the first capacity is less than or equal to a maximum single-level cell capacity of the storage device, and is greater than a capacity of the static single-level cell area of the storage device, where the maximum single-level cell capacity is a sum of capacities of the dynamic single-level cell area and the static single-level cell area that exist when the dynamic single-level cell area of the storage device is the largest.

When the overall space usage is greater than the first threshold and less than a second threshold, the size of the maximum available cache space decreases as the overall space usage increases, where the second threshold is greater than the first threshold.

When the overall space usage is greater than or equal to the second threshold, the size of the maximum available cache space is equal to a second capacity, and the second capacity is less than or equal to a third capacity, where the third capacity is the capacity of the static single-level cell area of the storage device, or a capacity of remaining available storage space of the storage device, or a smaller one of the capacity of the static single-level cell area of the storage device and the capacity of the remaining available storage space; and the remaining available storage space of the storage device is space remained after space occupied by regular data is subtracted from storage of the storage device, and the regular data includes data generated by a local user of an electronic device in which the storage device is located.

In a possible example, the first threshold is equal to maximum overall space usage corresponding to the maximum single-level cell capacity of the storage device, and the second threshold is equal to minimum overall space usage corresponding to a minimum single-level cell capacity of the storage device.

In another possible example, the first threshold is less or greater than maximum overall space usage corresponding to the maximum single-level cell capacity of the storage device, and the second threshold is less or greater than minimum overall space usage corresponding to a minimum single-level cell capacity of the storage device.

In a possible implementation, the adjusting a size of maximum available cache space of the storage device based on the overall space usage includes: when the overall space usage is greater than the first threshold and less than the second threshold, and the overall space usage changes by a third threshold, adjusting the size of the maximum available cache space of the storage device based on the overall space usage.

For example, the third threshold is 5%. When the overall space usage is greater than the first threshold and less than the second threshold, the size of the maximum available cache space of the storage device may be adjusted based on the overall space usage each time the overall space usage increases by 5%.

In a possible implementation, the method further includes: receiving a file request proposed by a first application, where the file request is used to request a first file, and the first application is an application in a memory of the electronic device in which the storage device is located; when neither cache space of the memory nor cache space of the storage device caches the first file, obtaining the first file from a server, and caching the first file in the cache space of the memory; when the cache space of the memory is fully occupied, removing a second file from the cache space of the memory; and caching the second file in the cache space of the storage device, where storage space occupied by cached data stored in the cache space of the storage device does not exceed the maximum available cache space.

Optionally, the method further includes: when the first file is cached in the cache space of the memory, reading the first file from the cache space of the memory, and returning the first file to the first application; and when the first file is cached in the cache space of the storage device, reading the first file from the cache space of the storage device, and returning the first file to the first application.

Optionally, the method further includes: dynamically adjusting, based on the overall space usage, a condition for storing a cache file in the storage device.

When the overall space usage is third overall space usage, an adjusted condition includes: a quantity of file operation hits of the cache file in the memory of the electronic device in which the storage device is located is greater than or equal to a third value, and/or a size of the cache file is less than or equal to a fourth value; or when the overall space usage is fourth overall space usage, the adjusted condition includes: the quantity of file operation hits of the cache file in the memory of the electronic device in which the storage device is located is greater than or equal to a fifth value, and/or the size of the cache file is less than or equal to a sixth value, where the fourth overall space usage is greater than the third overall space usage, the fifth value is greater than the third value, and the sixth value is less than the fourth value.

According to the method, the condition for storing the cache file in the cache space of the storage device is dynamically adjusted based on the overall space usage of the storage device, so that file writing to the storage device can be controlled, and I/O performance of the storage device is maintained to be in a good state.

In a possible implementation, when the overall space usage is less than or equal to the first threshold, the adjusted condition includes: the quantity of file operation hits of the cache file in the memory of the electronic device in which the storage device is located is greater than or equal to a first quantity, and/or the size of the cache file is less than or equal to a first byte.

When the overall space usage is greater than the first threshold and less than the second threshold, the adjusted condition includes: the quantity of file operation hits of the cache file in the memory of the electronic device in which the storage device is located is greater than or equal to a second quantity, and/or the size of the cache file is less than or equal to a second byte, where the second threshold is greater than the first threshold, the second quantity is greater than the first quantity, and the second byte is less than the first byte.

When the overall space usage is greater than or equal to the second threshold, the adjusted condition includes: the quantity of file operation hits of the cache file in the memory of the electronic device in which the storage device is located is greater than or equal to a third quantity, and/or the size of the cache file is less than or equal to a third byte, where the third quantity is greater than the second quantity, and the third byte is less than the second byte.

Optionally, the second quantity increases as the overall space usage increases, and/or the second byte decreases as the overall space usage increases.

In a possible implementation, the method further includes: receiving the file request proposed by the first application, where the file request is used to request the first file, and the first application is an application in the memory of the electronic device in which the storage device is located; when neither the cache space of the memory nor the cache space of the storage device caches the first file, obtaining the first file from the server, and caching the first file in the cache space of the memory; when the cache space of the memory is fully occupied, removing the second file from the cache space of the memory; and when the second file meets the adjusted condition, caching the second file in the cache space of the storage device.

According to a second aspect, an embodiment of this application provides a storage apparatus. The apparatus may be applied to an electronic device, so that the electronic device implements the storage method according to the first aspect or any one of the possible implementations of the first aspect. A function of the apparatus may be implemented by hardware, or may be implemented by executing corresponding software by hardware. The hardware or software includes one or more modules or units corresponding to the steps in the storage method according to the first aspect and any one of the possible implementations of the first aspect.

For example, the apparatus may include an obtaining unit, a processing unit, and the like. The obtaining unit and the processing unit may cooperate to implement the storage method according to the first aspect and any one of the possible implementations of the first aspect. For example, the obtaining unit may be configured to obtain overall space usage of a storage device, where the storage device includes working in a multi-level cell area, a dynamic single-level cell area, and a static single-level cell area, and the overall space usage is determined based on a size of storage space of the storage device and a size of a used area in the storage space of the storage device.

The processing unit may be configured to adjust a size of maximum available cache space of the storage device based on the overall space usage, where the maximum available cache space is maximum storage space that is allowed to be occupied by cached data when the cached data is stored in the storage device.

When the overall space usage is first overall space usage, a size of the dynamic single-level cell area is a fourth capacity, and an adjusted size of the maximum available cache space is a first value; or when the overall space usage is second overall space usage, the size of the dynamic single-level cell area is a fifth capacity, and the adjusted size of the maximum available cache space is a second value, where the second overall space usage is greater than the first overall space usage, the fifth capacity is less than the fourth capacity, and the second value is less than the first value.

In a possible implementation, when the overall space usage is less than or equal to a first threshold, the size of the maximum available cache space is equal to a first capacity, and the first capacity is less than or equal to a maximum single-level cell capacity of the storage device and is greater than a capacity of the static single-level cell area of the storage device, where the maximum single-level cell capacity is a sum of capacities of the dynamic single-level cell area and the static single-level cell area that exist when the dynamic single-level cell area of the storage device is the largest.

When the overall space usage is greater than the first threshold and less than a second threshold, the size of the maximum available cache space decreases as the overall space usage increases, where the second threshold is greater than the first threshold.

When the overall space usage is greater than or equal to the second threshold, the size of the maximum available cache space is equal to a second capacity, and the second capacity is less than or equal to a third capacity, where the third capacity is the capacity of the static single-level cell area of the storage device, or a capacity of remaining available storage space of the storage device, or a smaller one of the capacity of the static single-level cell area of the storage device and the capacity of the remaining available storage space; and the remaining available storage space of the storage device is space remained after space occupied by regular data is subtracted from storage of the storage device, and the regular data includes data generated by a local user of an electronic device in which the storage device is located.

In a possible example, the first threshold is equal to maximum overall space usage corresponding to the maximum single-level cell capacity of the storage device, and the second threshold is equal to minimum overall space usage corresponding to a minimum single-level cell capacity of the storage device.

In another possible example, the first threshold is less or greater than maximum overall space usage corresponding to the maximum single-level cell capacity of the storage device, and the second threshold is less or greater than minimum overall space usage corresponding to a minimum single-level cell capacity of the storage device.

In a possible implementation, the processing unit is specifically configured to: when the overall space usage is greater than the first threshold and less than the second threshold, and the overall space usage changes by a third threshold, adjust the size of the maximum available cache space of the storage device based on the overall space usage.

In a possible implementation, the processing unit is further configured to: receive a file request proposed by a first application, where the file request is used to request a first file, and the first application is an application in a memory of the electronic device in which the storage device is located; when neither cache space of the memory nor cache space of the storage device caches the first file, obtain the first file from a server, and cache the first file in the cache space of the memory; when the cache space of the memory is fully occupied, remove a second file from the cache space of the memory; and cache the second file in the cache space of the storage device, where storage space occupied by cached data stored in the cache space of the storage device does not exceed the maximum available cache space.

Optionally, the processing unit is further configured to: when the first file is cached in the cache space of the memory, read the first file from the cache space of the memory, and return the first file to the first application; and when the first file is cached in the cache space of the storage device, read the first file from the cache space of the storage device, and return the first file to the first application.

Optionally, the processing unit is further configured to dynamically adjust, based on the overall space usage, a condition for storing a cache file in the storage device.

When the overall space usage is third overall space usage, an adjusted condition includes: a quantity of file operation hits of the cache file in the memory of the electronic device in which the storage device is located is greater than or equal to a third value, and/or a size of the cache file is less than or equal to a fourth value; or when the overall space usage is fourth overall space usage, the adjusted condition includes: the quantity of file operation hits of the cache file in the memory of the electronic device in which the storage device is located is greater than or equal to a fifth value, and/or the size of the cache file is less than or equal to a sixth value, where the fourth overall space usage is greater than the third overall space usage, the fifth value is greater than the third value, and the sixth value is less than the fourth value.

In a possible implementation, when the overall space usage is less than or equal to the first threshold, the adjusted condition includes: the quantity of file operation hits of the cache file in the memory of the electronic device in which the storage device is located is greater than or equal to a first quantity, and/or the size of the cache file is less than or equal to a first byte.

When the overall space usage is greater than the first threshold and less than the second threshold, the adjusted condition includes: the quantity of file operation hits of the cache file in the memory of the electronic device in which the storage device is located is greater than or equal to a second quantity, and/or the size of the cache file is less than or equal to a second byte, where the second threshold is greater than the first threshold, the second quantity is greater than the first quantity, and the second byte is less than the first byte.

When the overall space usage is greater than or equal to the second threshold, the adjusted condition includes: the quantity of file operation hits of the cache file in the memory of the electronic device in which the storage device is located is greater than or equal to a third quantity, and/or the size of the cache file is less than or equal to a third byte, where the third quantity is greater than the second quantity, and the third byte is less than the second byte.

Optionally, the second quantity increases as the overall space usage increases, and/or the second byte decreases as the overall space usage increases.

In a possible implementation, the processing unit is further configured to: receive the file request proposed by the first application, where the file request is used to request the first file, and the first application is an application in the memory of the electronic device in which the storage device is located; when neither the cache space of the memory nor the cache space of the storage device caches the first file, obtain the first file from the server, and cache the first file in the cache space of the memory; when the cache space of the memory is fully occupied, remove the second file from the cache space of the memory; and when the second file meets the adjusted condition, cache the second file in the cache space of the storage device.

Similarly, the obtaining unit and the processing unit may cooperate to implement functions corresponding to all steps of the storage method according to the first aspect and any one of the possible implementations of the first aspect. Details are not described herein again.

According to a third aspect, an embodiment of this application provides an electronic device, and the electronic device may include a storage device. The electronic device includes: a processor configured to store a memory that is configured to store instructions executable by the processor, where when the processor is configured to execute the instructions, the electronic device is enabled to implement the storage method according to the first aspect or any one of the possible implementations of the first aspect.

According to a fourth aspect, an embodiment of this application provides a computer-readable storage medium, the computer-readable storage medium stores computer program instructions, and when the computer program instructions are executed by an electronic device, the electronic device is enabled to implement the storage method according to the first aspect and any one of the possible implementations of the first aspect.

According to a fifth aspect, an embodiment of this application provides a computer program product including computer-readable code or a non-volatile computer-readable storage medium carrying computer-readable code. When the computer-readable code runs in an electronic device, a processor in the electronic device performs the storage method in the first aspect or one or more of the possible implementations of the first aspect.

For beneficial effect of the second aspect to the fifth aspect, refer to the descriptions in the first aspect. Details are not described herein again.

According to a sixth aspect, an embodiment of this application provides a storage method, where the method includes: obtaining overall space usage of a storage device, where the storage device includes working in a multi-level cell area, a dynamic single-level cell area, and a static single-level cell area, and the overall space usage is determined based on a size of storage space of the storage device and a size of a used area in the storage space of the storage device. A condition for storing a cache file in the storage device is dynamically adjusted based on the overall space usage.

When the overall space usage is third overall space usage, a size of the dynamic single-level cell area is a fourth capacity, and an adjusted condition includes: a quantity of file operation hits of the cache file in the memory of an electronic device in which the storage device is located is greater than or equal to a third value, and/or a size of the cache file is less than or equal to a fourth value; or when the overall space usage is fourth overall space usage, the size of the dynamic single-level cell area is a fifth capacity, and the adjusted condition includes: the quantity of file operation hits of the cache file in the memory of the electronic device in which the storage device is located is greater than or equal to a fifth value, and/or the size of the cache file is less than or equal to a sixth value, where the fourth overall space usage is greater than the third overall space usage, the fifth capacity is less than the fourth capacity, the fifth value is greater than the third value, and the sixth value is less than the fourth value.

According to the method, the condition for storing the cache file in the cache space of the storage device is dynamically adjusted based on the overall space usage of the storage device, so that file writing to the storage device can be controlled, and I/O performance of the storage device is maintained to be in a good state.

In a possible implementation, when the overall space usage is less than or equal to the first threshold, the adjusted condition includes: the quantity of file operation hits of the cache file in the memory of the electronic device in which the storage device is located is greater than or equal to a first quantity, and/or the size of the cache file is less than or equal to a first byte.

When the overall space usage is greater than the first threshold and less than the second threshold, the adjusted condition includes: the quantity of file operation hits of the cache file in the memory of the electronic device in which the storage device is located is greater than or equal to a second quantity, and/or the size of the cache file is less than or equal to a second byte, where the second threshold is greater than the first threshold, the second quantity is greater than the first quantity, and the second byte is less than the first byte.

When the overall space usage is greater than or equal to the second threshold, the adjusted condition includes: the quantity of file operation hits of the cache file in the memory of the electronic device in which the storage device is located is greater than or equal to a third quantity, and/or the size of the cache file is less than or equal to a third byte, where the third quantity is greater than the second quantity, and the third byte is less than the second byte.

In a possible example, the first threshold is equal to maximum overall space usage corresponding to a maximum single-level cell capacity of the storage device, and the second threshold is equal to minimum overall space usage corresponding to a minimum single-level cell capacity of the storage device.

In another possible example, the first threshold is less or greater than maximum overall space usage corresponding to a maximum single-level cell capacity of the storage device, and the second threshold is less or greater than minimum overall space usage corresponding to a minimum single-level cell capacity of the storage device.

Optionally, the second quantity increases as the overall space usage increases, and/or the second byte decreases as the overall space usage increases.

In a possible implementation, the method further includes: receiving a file request proposed by a first application, where the file request is used to request a first file, and the first application is an application in a memory of the electronic device in which the storage device is located; when neither cache space of the memory nor cache space of the storage device caches the first file, obtaining the first file from a server, and caching the first file in the cache space of the memory; when the cache space of the memory is fully occupied, removing a second file from the cache space of the memory; and when the second file meets the adjusted condition, caching the second file in the cache space of the storage device.

Optionally, the method further includes: when the first file is cached in the cache space of the memory, reading the first file from the cache space of the memory, and returning the first file to the first application; and when the first file is cached in the cache space of the storage device, reading the first file from the cache space of the storage device, and returning the first file to the first application.

According to a seventh aspect, an embodiment of this application provides a storage apparatus. The apparatus may be applied to an electronic device, so that the electronic device implements the storage method according to the sixth aspect or any one of the possible implementations of the sixth aspect. A function of the apparatus may be implemented by hardware, or may be implemented by executing corresponding software by hardware. The hardware or software includes one or more modules or units corresponding to the steps in the storage method according to the sixth aspect and any one of the possible implementations of the sixth aspect.

For example, the apparatus may include an obtaining unit, a processing unit, and the like. The obtaining unit and the processing unit may cooperate to implement the storage method according to the sixth aspect and any one of the possible implementations of the sixth aspect. For example, the obtaining unit may be configured to obtain overall space usage of a storage device, where the storage device includes working in a multi-level cell area, a dynamic single-level cell area, and a static single-level cell area, and the overall space usage is determined based on a size of storage space of the storage device and a size of a used area in the storage space of the storage device. The processing unit may be configured to dynamically adjust, based on the overall space usage, a condition for storing a cache file in the storage device.

When the overall space usage is third overall space usage, a size of the dynamic single-level cell area is a fourth capacity, and an adjusted condition includes: a quantity of file operation hits of the cache file in the memory of the electronic device in which the storage device is located is greater than or equal to a third value, and/or a size of the cache file is less than or equal to a fourth value; or when the overall space usage is fourth overall space usage, the size of the dynamic single-level cell area is a fifth capacity, and the adjusted condition includes: the quantity of file operation hits of the cache file in the memory of the electronic device in which the storage device is located is greater than or equal to a fifth value, and/or the size of the cache file is less than or equal to a sixth value, where the fourth overall space usage is greater than the third overall space usage, the fifth capacity is less than the fourth capacity, the fifth value is greater than the third value, and the sixth value is less than the fourth value.

In a possible implementation, when the overall space usage is less than or equal to the first threshold, the adjusted condition includes: the quantity of file operation hits of the cache file in the memory of the electronic device in which the storage device is located is greater than or equal to a first quantity, and/or the size of the cache file is less than or equal to a first byte.

When the overall space usage is greater than the first threshold and less than the second threshold, the adjusted condition includes: the quantity of file operation hits of the cache file in the memory of the electronic device in which the storage device is located is greater than or equal to a second quantity, and/or the size of the cache file is less than or equal to a second byte, where the second threshold is greater than the first threshold, the second quantity is greater than the first quantity, and the second byte is less than the first byte.

When the overall space usage is greater than or equal to the second threshold, the adjusted condition includes: the quantity of file operation hits of the cache file in the memory of the electronic device in which the storage device is located is greater than or equal to a third quantity, and/or the size of the cache file is less than or equal to a third byte, where the third quantity is greater than the second quantity, and the third byte is less than the second byte.

In a possible example, the first threshold is equal to maximum overall space usage corresponding to a maximum single-level cell capacity of the storage device, and the second threshold is equal to minimum overall space usage corresponding to a minimum single-level cell capacity of the storage device.

In another possible example, the first threshold is less or greater than maximum overall space usage corresponding to a maximum single-level cell capacity of the storage device, and the second threshold is less or greater than minimum overall space usage corresponding to a minimum single-level cell capacity of the storage device.

Optionally, the second quantity increases as the overall space usage increases, and/or the second byte decreases as the overall space usage increases.

In a possible implementation, the processing unit is further configured to: receive a file request proposed by a first application, where the file request is used to request a first file, and the first application is an application in a memory of the electronic device in which the storage device is located; when neither cache space of the memory nor cache space of the storage device caches the first file, obtain the first file from a server, and cache the first file in the cache space of the memory; when the cache space of the memory is fully occupied, remove a second file from the cache space of the memory; and when the second file meets the adjusted condition, cache the second file in the cache space of the storage device.

Optionally, the processing unit is further configured to: when the first file is cached in the cache space of the memory, read the first file from the cache space of the memory, and return the first file to the first application; and when the first file is cached in the cache space of the storage device, read the first file from the cache space of the storage device, and return the first file to the first application.

Similarly, the obtaining unit and the processing unit may cooperate to implement functions corresponding to all steps of the storage method according to the sixth aspect and any one of the possible implementations of the sixth aspect. Details are not described herein again.

According to an eighth aspect, an embodiment of this application provi des an electronic device, and the electronic device may include a storage device. The electronic device includes: a processor configured to store a memory that is configured to store instructions executable by the processor, where when the processor is configured to execute the instructions, the electronic device is enabled to implement the storage method according to the sixth aspect or any one of the possible implementations of the sixth aspect.

According to a ninth aspect, an embodiment of this application provides a computer-readable storage medium, the computer-readable storage medium stores computer program instructions, and when the computer program instructions are executed by an electronic device, the electronic device is enabled to implement the storage method according to the sixth aspect and any one of the possible implementations of the sixth aspect.

According to a tenth aspect, an embodiment of this application provides a computer program product including computer-readable code or a non-volatile computer-readable storage medium carrying computer-readable code. When the computer-readable code runs in an electronic device, a processor in the electronic device performs the storage method in the sixth aspect or one or more of the possible implementations of the sixth aspect.

For beneficial effect of the seventh aspect to the tenth aspect, refer to the descriptions in the sixth aspect. Details are not described herein again.

It should be understood that, descriptions of technical features, technical solutions, beneficial effect, or similar words in this application do not imply that all features and advantages can be implemented in any individual embodiment. On the contrary, it may be understood that, the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in embodiments may be combined in any proper manner. A person skilled in the art may understand that an embodiment may be implemented without one or more specific technical features or technical solutions, or beneficial effect in a specific embodiment. In other embodiments, additional technical features and beneficial effect may be identified in a specific embodiment that does not reflect all embodiments.

**BRIEF DESCRIPTION OF DRAWINGS**

FIG. 1 is a schematic diagram of a structure of an electronic device according to an embodiment of this application;
FIG. 2 is a schematic diagram of a structure of an electronic device according to an embodiment of this application;
FIG. 3 is a schematic flowchart of a storage method according to an embodiment of this application;
FIG. 4 is a schematic diagram of storage space of a hybrid SSD with a dynamic SLC capacity according to an embodiment of this application;
FIG. 5 is a schematic diagram of a relationship between an SLC capacity and overall space usage according to an embodiment of this application;
FIG. 6 is a schematic diagram of composition of a storage device of an electronic device according to an embodiment of this application;
FIG. 7 is another schematic flowchart of a storage method according to an embodiment of this application;

FIG. 8 is a schematic diagram of a structure of a storage apparatus according to an embodiment of this application; and
FIG. 9 is another schematic diagram of a structure of a storage apparatus according to an embodiment of this application.

**DESCRIPTION OF EMBODIMENTS**

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in the following embodiments of this application, "at least one" and "one or more" mean one or more than two (including two). The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise" "have", and their variants all mean "include but are not limited to", unless otherwise specifically emphasized in another manner. The term "connection" includes a direct connection and an indirect connection, unless otherwise stated.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In embodiments of this application, the word "example", "for example", or the like is used to represent giving an example, an illustration, or descriptions. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

A solid state flash storage device (solid state disk, SSD) is also referred to as a solid state drive, a solid state disk, or the like. With rapid progress of flash storage technologies and increasing storage requirements, storage density of the SSD gradually increases. For example, a use mode of a storage unit of the SSD is gradually increased from a single-level cell (single-level cell, SLC) mode to a multi-level cell (multi-level cell, MLC) mode, a triple-level cell (triple-level cell, TLC) mode, a quad-level cell (quad-level cell, QLC) mode, and the like. In the SLC mode, each storage unit of the SSD may store one bit of data. In the MLC mode, each storage unit of the SSD may store two bits of data. In the TLC mode, each storage unit of the SSD may store three bits of data. In the QLC mode, each storage unit of the SSD may store four bits of data.

The increase of the storage density of the SSD may make a capacity of the SSD larger and costs lower, but input/output (input/output, I/O) performance (namely, read/write performance) of the SSD is greatly reduced. Currently, the SSD uses a manner of mixing a high-speed medium and a low-speed medium, so that the I/O performance of the SSD can be optimized. Mixing a high-speed medium and a low-speed medium in the SSD means that: the SSD may include a high-speed medium and a low-speed medium, and the SSD preferentially uses the high-speed medium to meet a read/write requirement. For example, the high-speed medium may be a storage medium using an SLC mode, and the low-speed medium may be a storage medium using a multi-level cell mode such as an MLC mode, a TLC mode, or a QLC mode. That is, storage space of the SSD that uses the manner of mixing a high-speed medium and a low-speed medium may include a multi-level cell area and an SLC area. The SSD that uses the manner of mixing a high-speed medium and a low-speed medium may be referred to as a hybrid SSD.

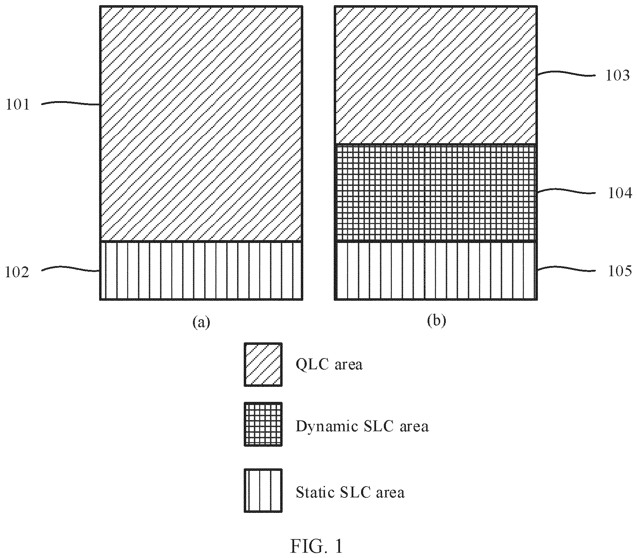

Currently, the hybrid SSD may include a hybrid SSD with a static SLC capacity, and a hybrid SSD with a dynamic SLC capacity. For example, storage space of the hybrid SSD includes a QLC area (the QLC area may alternatively be an MLC area, a TLC area, or the like) and an SLC area. FIG. 1 is a schematic diagram of composition of the storage space of the hybrid SSD. (a) in FIG. 1 shows a hybrid SSD with a static SLC capacity, and (b) in FIG. 1 shows a hybrid SSD with a dynamic SLC capacity.

As shown in (a) in FIG. 1, storage space of the hybrid SSD with the static SLC capacity may include a QLC area 101 and a static SLC area 102. A size of the static SLC area 102 is fixed, and the static SLC area 102 may be used as a read/write buffer area of the entire hybrid SSD with the static SLC capacity.

As shown in (b) in FIG. 1, storage space of the hybrid SSD with the dynamic SLC capacity may include a QLC area 103, a dynamic SLC area 104, and a static SLC area 105. A flash memory block in the dynamic SLC area 104 originally works in a QLC mode, but this part of flash memory block may be converted into an SLC mode. Therefore, an area formed by this part of flash memory block that is converted into the SLC mode may be referred to as the dynamic SLC area 104. Compared with the hybrid SSD with the static SLC capacity shown in (a) in FIG. 1, in the hybrid SSD with the dynamic SLC capacity shown in (b) in FIG. 1, a size of the static SLC area 105 is also fixed, but a size of the dynamic SLC area 104 is variable. As overall space usage of the hybrid SSD with the dynamic SLC capacity gradually increases, some areas in the dynamic SLC area 104 are switched to work in the QLC mode (that is, are switched to the QLC area 103), and the dynamic SLC area 104 gradually decreases. As the overall space usage of the hybrid SSD with the dynamic SLC capacity gradually decreases, some areas that are in the dynamic SLC area 104 and that work in the QLC mode are switched back to the SLC area, and the dynamic SLC area 104 gradually increases. The overall space usage of the hybrid SSD with the dynamic SLC capacity may be a ratio of a used area of the storage space of the hybrid SSD with the dynamic SLC capacity to all areas (including a used area and an unused area) of the storage space of the hybrid SSD with the dynamic SLC capacity. The dynamic SLC area 104 and the static SLC area 105 may be used as a read/write buffer area of the entire hybrid SSD with the dynamic SLC capacity. Compared with the hybrid SSD with the static SLC capacity, the hybrid SSD with the dynamic SLC capacity has a larger read/write buffer area and better I/O performance.

For the hybrid SSD with the dynamic SLC capacity, when some areas in the dynamic SLC area are switched to the multi-level cell mode, a capacity of the hybrid SSD with the dynamic SLC capacity increases, but the I/O performance of the hybrid SSD with the dynamic SLC capacity decreases.

In this background technology, an embodiment of this application provides a storage method. In the method, maximum available cache space of a hybrid SSD with a dynamic SLC capacity may be dynamically adjusted based on overall space usage of the hybrid SSD with the dynamic SLC capacity, to optimize I/O performance of the hybrid SSD with the dynamic SLC capacity.

The overall space usage of the hybrid SSD with the dynamic SLC capacity may be represented by a ratio of a used area to all areas in storage space of the hybrid SSD with the dynamic SLC capacity. The used area in the storage space of the hybrid SSD with the dynamic SLC capacity is an area that is in the storage space of the hybrid SSD with the dynamic SLC capacity and in which regular data is stored and an area that is in the storage space of the hybrid SSD with the dynamic SLC capacity and in which cached data is stored. The maximum available cache space indicates maximum storage space that can be occupied by cached data when the cached data is stored in the hybrid SSD with the dynamic SLC capacity.

For example, the hybrid SSD with the dynamic SLC capacity may be used as a storage device of an electronic device (for example, a mobile phone), the regular data may include data generated by a local user of the electronic device, and the cached data may include remote data that is locally stored by the electronic device to improve data request performance.

For example, the electronic device is a mobile phone. An operating system of the mobile phone may run various networked applications such as chat software and a network video player. These networked applications often need to request a data file from a network end (namely, a remote end). However, memory space of the mobile phone is usually small, and it is difficult to meet a file caching requirement of all applications. If each file request of an application passes through the network, unbearable performance deterioration may be caused. Therefore, the mobile phone can store a data file as cached data to a local SSD to improve data request performance.

For example, the method may be applied to the foregoing electronic device that uses the hybrid SSD with the dynamic SLC capacity as the storage device.

In some embodiments, the electronic device may include a terminal device, a server, a virtual machine (virtual machine, VM), or the like. The terminal device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device/a virtual reality (virtual reality, VR) device, or the like. A specific form of the electronic device is not specifically limited in this embodiment of this application.

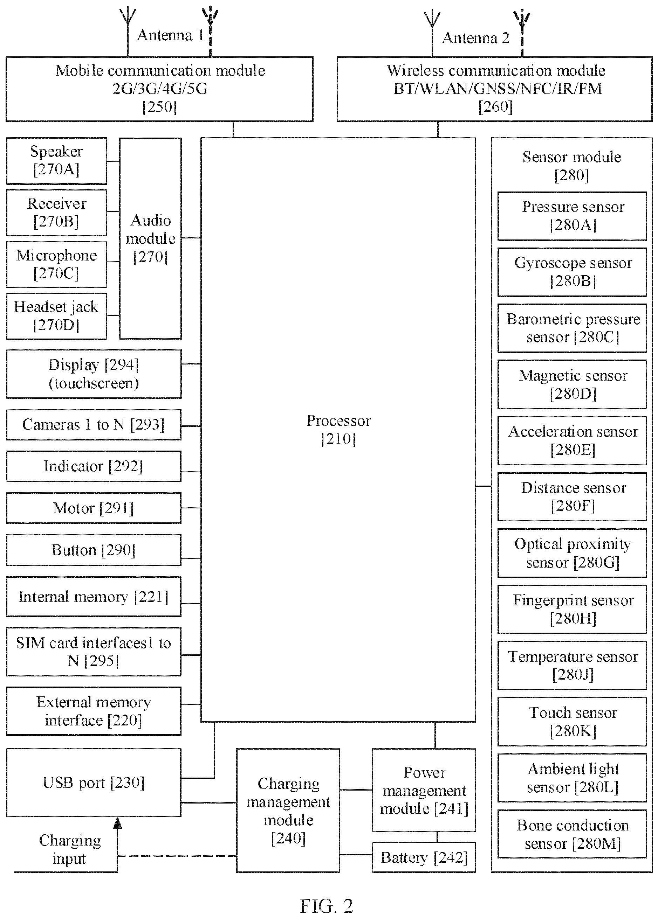

For example, the electronic device is a mobile phone. FIG. 2 is a schematic diagram of a structure of the electronic device according to an embodiment of this application. As shown in FIG. 2, the electronic device may include a processor 210, an external memory interface 220, an internal memory 221, a universal serial bus (universal serial bus, USB) port 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device. The controller may generate an operation control signal based on instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description, and does not constitute a limitation on the structure of the electronic device. In some other embodiments, the electronic device may alternatively use an interface connection manner different from that in the foregoing embodiment, or a combination of a plurality of interface connection manners.

The charging management module 240 is configured to receive charging input from a charger. The charging management module 240 supplies power to the electronic device by using the power management module 241 while charging the battery 242.

The power management module 241 is configured to connect to the battery 242, the charging management module 240, and the processor 210. The power management module 241 receives input of the battery 242 and/or the charging management module 240, to supply power to the processor 210, the internal memory 221, an external memory, the display 294, the camera 293, the wireless communication module 260, and the like. The power management module 241 may be further configured to monitor parameters such as a battery capacity, a quantity of battery cycles, and a battery health status (electric leakage and impedance). In some other embodiments, the power management module 241 may alternatively be disposed in the processor 210. In some other embodiments, the power management module 241 and the charging management module 240 may alternatively be disposed in a same device.

A wireless communication function of the electronic device may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. The mobile communication module 250 may provide a solution applied to the electronic device for wireless communication such as 2G/3G/4G/5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some function modules in the mobile communication module 250 may be disposed in the processor 210. In some embodiments, at least some functional modules in the mobile communication module 250 may be disposed in a same device as the at least some modules in the processor 210.

The modem processor may include a modulator and a demodulator. In some embodiments, the modem processor may be an independent device. In some other embodiments, the modem processor may be independent of the processor 210, and is disposed in a same device as the mobile communication module 250 or another functional module.

The wireless communication module 260 may provide a solution applied to the electronic device for wireless communication including a wireless local area network (wireless local area network, WLAN) (for example, a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), an infrared (infrared, IR) technology, and the like. The wireless communication module 260 may be one or more devices integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device, the antenna 1 is coupled to the mobile communication module 250, and the antenna 2 is coupled to the wireless communication module 260, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS). For example, in this embodiment of this application, the electronic device may interact with network ends of some networked applications by using the wireless communication module 260 and by using a wireless communication technology.

The electronic device implements a display function by using the GPU, the display 294, the application processor, and the like. The GPU is a microprocessor for image processing, and is connected to the display 294 and the application processor. The processor 210 may include one or more GPUs that execute program instructions to generate or change display information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flex light-emitting diode (flex light-emitting diode, FLED), a mini-LED, a micro-LED, a micro-OLED, a quantum dot light-emitting diode (quantum dot light emitting diode, QLED), or the like. In some embodiments, the electronic device may include one or N displays 294, where N is a positive integer greater than 1.

The electronic device may implement an image shooting function by using the ISP, the camera 293, the video codec, the GPU, the display 294, the application processor, and the like.

The external memory interface 220 may be configured to connect to an external storage card, for example, a micro SD card, to extend a storage capability of the electronic device. The external storage card communicates with the processor 210 through the external memory interface 220, to implement a data storage function. For example, a music file or a video file is stored in the external storage card.

The internal memory 221 may be configured to store computer-executable program code. The executable program code includes instructions. The processor 210 executes various function applications of the electronic device and data processing by running the instructions stored in the internal memory 221. For example, in this embodiment of this application, the processor 210 may execute the instruction stored in the internal memory 221, to implement the storage method provided in this embodiment of this application. The internal memory 221 may include a program storage area and a data storage area. The program storage area may store an operating system, an application required by at least one function (for example, a voice playing function or an image playing function), and the like. The data storage area may store data (such as audio data and a phone book) created when the electronic device is used, and the like. In addition, the internal memory 221 may include a high-speed random access memory, and may further include a non-volatile memory, for example, a hybrid SSD with a dynamic SLC capacity, a flash memory device, or a universal flash storage (universal flash storage, UFS).

The electronic device may implement an audio function by using the audio module 270, the speaker 270A, the receiver 270B, the microphone 270C, the headset jack 270D, the application processor, and the like. For example, the audio function includes call, music playing, and recording.

The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in FIG. 2 does not constitute a specific limitation on the electronic device. In some other embodiments of this application, when the electronic device is another device, for example, the tablet computer, the desktop computer, the laptop computer, the handheld computer, the notebook computer, the UMPC, the netbook, the cellular phone, the PDA, the AR device/VR device, the electronic device may include more or fewer components than those shown in FIG. 2, or some components may be combined, or some components may be split, or different component arrangements may be used. The components shown in FIG. 2 may be implemented by hardware, software, or a combination of software and hardware. A specific structure of the electronic device is not limited in this embodiment of this application.

The following describes, with reference to specific examples, a storage method provided in embodiments of this application.

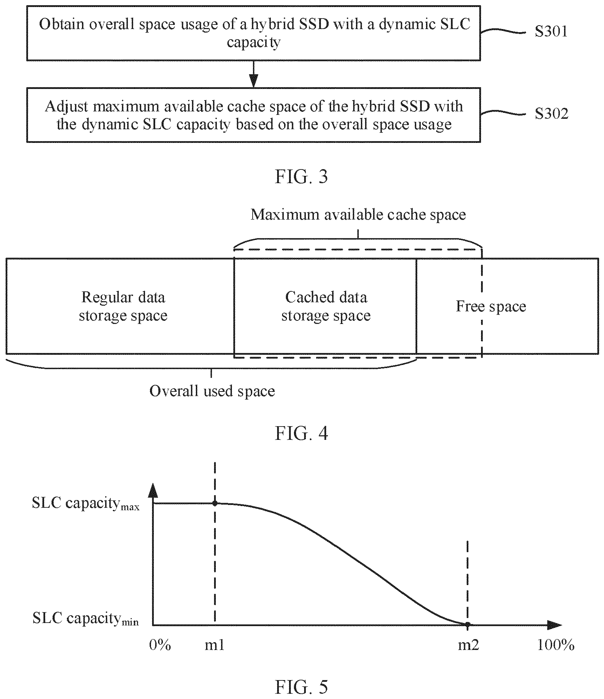

For example, FIG. 3 is a schematic flowchart of a storage method according to an embodiment of this application. As shown in FIG. 3, the method may include the following steps.

S301: Obtain overall space usage of a hybrid SSD with a dynamic SLC capacity.

For example, FIG. 4 is a schematic diagram of storage space of the hybrid SSD with the dynamic SLC capacity according to an embodiment of this application. As shown in FIG. 4, the storage space of the hybrid SSD with the dynamic SLC capacity may include: regular data storage space, cached data storage space, and free space.

Regular data, for example, data generated by a local user of an electronic device, is stored in the regular data storage space. Cached data, for example, remote data locally stored by the electronic device to improve data request performance, is stored in the cache data storage space. The free space is storage space in which no data is stored.

The overall space usage of the hybrid SSD with the dynamic SLC capacity may be a ratio of a sum of a size of the regular data storage space and a size of the cached data storage space to a size of the storage space of the hybrid SSD with the dynamic SLC capacity. An area formed by the regular data storage space and the cached data storage space is a used area in the storage space of the hybrid SSD with the dynamic SLC capacity. The area formed by the regular data storage space and the cached data storage space may alternatively be referred to as total used space.

It may be understood that, in the hybrid SSD with the dynamic SLC capacity, a size of a dynamic SLC area is related to the overall space usage. For example, when the overall space usage is first overall space usage, the size of the dynamic SLC area is a fourth capacity; or when the overall space usage is second overall space usage, the size of the dynamic SLC area is a fifth capacity. When the second overall space usage is greater than the first overall space usage, the fifth capacity is less than the fourth capacity. Both the second overall space usage and the first overall space usage are greater than maximum overall space usage corresponding to a maximum SLC capacity of the hybrid SSD with the dynamic SLC capacity, and are less than minimum overall space usage corresponding to a minimum SLC capacity of the hybrid SSD with the dynamic SLC capacity.

S302: Adjust maximum available cache space of the hybrid SSD with the dynamic SLC capacity based on the overall space usage.

In some embodiments, S302 may include: when the overall space usage is less than or equal to a first threshold, adjusting the maximum available cache space of the hybrid SSD with the dynamic SLC capacity, so that a size of the maximum available cache space is equal to a first capacity, where the first capacity is less than or equal to the maximum SLC capacity of the hybrid SSD with the dynamic SLC capacity and is greater than a capacity of a static SLC area of the hybrid SSD with the dynamic SLC capacity; when the overall space usage is greater than the first threshold and less than a second threshold, and the second threshold is greater than the first threshold, adjusting the maximum available cache space of the hybrid SSD with the dynamic SLC capacity, so that the size of the maximum available cache space decreases as the overall space usage increases; or when the overall space usage is greater than or equal to the second threshold, adjusting the maximum available cache space of the hybrid SSD with the dynamic SLC capacity, so that the size of the maximum available cache space is equal to a second capacity, and the second capacity is less than or equal to the capacity of the static SLC area of the hybrid SSD with the dynamic SLC capacity. It may be understood that the second capacity is less than the first capacity.

The maximum SLC capacity is a sum of the capacities of the dynamic SLC area and the static SLC area when all multi-level cell areas that can be converted into an SLC mode in the hybrid SSD with the dynamic SLC capacity work in the SLC mode.

In a possible implementation, the first threshold may be the maximum overall space usage corresponding to the maximum SLC capacity of the hybrid SSD with the dynamic SLC capacity, and the second threshold may be the minimum overall space usage corresponding to the minimum SLC capacity of the hybrid SSD with the dynamic SLC capacity.

For example, when all of the multi-level cell areas that can be converted into the SLC mode in the hybrid SSD with the dynamic SLC capacity work in the SLC mode, the SLC capacity of the hybrid SSD with the dynamic SLC capacity is the largest. When the overall space usage increases to a value, the dynamic SLC area decreases. In this case, the overall space usage is the maximum overall space usage corresponding to the maximum SLC capacity. When the overall space usage continues to increase and increases to another value, the dynamic SLC area decreases to 0 and the SLC capacity of the hybrid SSD with the dynamic SLC capacity becomes the smallest (namely, the capacity of the static SLC area). In this case, the overall space usage is the minimum overall space usage corresponding to the minimum SLC capacity.

For example, FIG. 5 is a schematic diagram of a relationship between an SLC capacity and overall space usage according to an embodiment of this application. The horizontal axis represents the overall space usage of the hybrid SSD with the dynamic SLC capacity, and the vertical axis represents an SLC capacity corresponding to a current overall space usage. SLC capacity$_{max}$ represents the maximum SLC capacity of the hybrid SSD with the dynamic SLC capacity, that is, the sum of the capacities of the dynamic SLC area and the static SLC area when all of the multi-level cell areas that can be converted to the SLC mode in the hybrid SSD with the dynamic SLC capacity work in the SLC mode. SLC capacity$_{min}$ represents the minimum SLC capacity of the hybrid SSD with the dynamic SLC capacity, namely, the capacity of the static SLC area.

As shown in FIG. 5, when the overall space usage is less than or equal to ml (ml is greater than 0 and less than m2), the SLC capacity of the hybrid SSD with the dynamic SLC capacity is SLC capacity$_{max}$; when the overall space usage is greater than ml and less than m2 (m2 is greater than ml and less than 100%), the SLC capacity of the hybrid SSD with the dynamic SLC capacity decreases as the overall space usage increases; and when the overall space usage is equal to m2, the SLC capacity of the hybrid SSD with the dynamic SLC capacity is SLC capacity$_{min}$.

Herein, ml represents the maximum overall space usage corresponding to the maximum SLC capacity, and m2 represents the minimum overall space usage corresponding to the minimum SLC capacity. A value of the first threshold may be equal to ml, and a value of the second threshold may be equal to m2.

In this implementation, when the overall space usage is less than or equal to ml, the maximum available cache space of the hybrid SSD with the dynamic SLC capacity may be adjusted, so that the size of the maximum available cache space is equal to the first capacity, and the first capacity is less than or equal to SLC capacity$_{max}$. When the overall space usage is greater than ml and less than m2, the maximum available cache space of the hybrid SSD with the dynamic SLC capacity may be adjusted, so that the size of the maximum available cache space decreases as the overall space usage increases. When the overall space usage is greater than or equal to m2, the maximum available cache space of the hybrid SSD with the dynamic SLC capacity may be adjusted, so that the size of the maximum available cache space is equal to the second capacity, and the second capacity may be less than or equal to SLC capacity$_{min}$.

That is, in this implementation, the hybrid SSD with the dynamic SLC capacity may be divided, based on the overall space usage, into three stages: The overall space usage is less than or equal to the first threshold, the overall space usage is greater than the first threshold and less than the second threshold, and the overall space usage is greater than or equal to the second threshold. For example, a stage in which the overall space usage is less than or equal to the first threshold may be referred to as an idle stage, a stage in which the overall space usage is greater than the first threshold and less than the second threshold may be referred to as a medium stage, and a stage in which the overall space usage is greater than or equal to the second threshold may be referred to as a heavy stage. In the idle stage, all of the multi-level cell areas that can be converted to the SLC mode in the hybrid SSD with the dynamic SLC capacity work in the SLC mode, the SLC capacity is a maximum value, and overall performance of the hybrid SSD with the dynamic SLC capacity is in a good state. In this application, the size of the maximum available cache space may be set to the first capacity, and the first capacity may be less than or equal to the maximum SLC capacity. In the medium stage, some of the multi-level cell areas that can be converted into the SLC mode in the hybrid SSD with the dynamic SLC capacity work in the SLC mode, and the SLC capacity is in a decreasing trend. In this application, the size of the maximum available cache space may be adjusted based on the overall space usage, so that the size of the maximum available cache space decreases as the overall space usage increases. In the heavy stage, all of the multi-level cell areas that can be converted into the SLC mode in the hybrid SSD with the dynamic SLC capacity work in a multi-level cell mode. The SLC capacity of the hybrid SSD with the dynamic SLC capacity is the capacity of the static SLC area. In this application, the size of the maximum available cache space may be set to the second capacity, and the second capacity may be less than or equal to the capacity of the static SLC area.

For example, the first capacity is equal to the maximum SLC capacity, and the second capacity is equal to the capacity of the static SLC area. In a possible example, when the overall space usage is greater than the first threshold and less than the second threshold, the maximum available cache space of the hybrid SSD with the dynamic SLC capacity may be adjusted according to the following formula (1), so that the size of the maximum available cache space decreases as the overall space usage increases.

$$Y = kX + c \quad \text{Formula (1)}$$

In the formula (1), *Y* represents the size of the maximum available cache space, *X* represents the overall space usage, *k* represents a coefficient, *c* is a constant, and values of *k* and *c* may be calculated by substituting the first capacity and the first threshold, and the second capacity and the second threshold into the formula (1).

For example, the first capacity is n1 (the maximum SLC capacity), the first threshold is ml, and the second capacity is n2 (the capacity of the static SLC area). The following equation set (1) may be obtained by substituting n1, ml, n2, and n2 into the foregoing formula (1).

$$\begin{cases} n1 = km1 + c \\ n2 = km2 + c \end{cases} \text{Equation set (1)}$$

By solving the equation set (1), values of *k* and *c* may be obtained as follows.

$$k = \frac{n2 - n1}{m2 - m1}$$

$$c = n1 - km1 = n2 - km2$$

After the values of *k* and *c* are obtained, the maximum available cache space of the hybrid SSD with the dynamic SLC capacity can be adjusted based on the overall space usage according to the formula (1), so that the size of the maximum available cache space decreases as the overall space usage increases.

It may be understood that, when the maximum available cache space of the hybrid SSD with the dynamic SLC capacity is adjusted based on the overall space usage according to the foregoing formula (1), the size of the maximum available cache space may decrease linearly as the overall space usage increases. In addition, in this example, the formula (1) is merely used as a manner of adjusting the size of the maximum available cache space to decrease as the overall space usage increases, and is not used for limitation. In some other examples, another manner may be used to adjust the size of the maximum available cache space to decrease as the overall space usage increases.

Optionally, in some embodiments, when the overall space usage is greater than the first threshold and less than the second threshold, the maximum available cache space of the hybrid SSD with the dynamic SLC capacity may be adjusted based on the overall space usage according to the foregoing formula (1) each time the overall space usage changes (for example, increases or decreases) by a third threshold. For example, the third threshold may be 5%, 6%, 8%, or the like. A value of the third threshold is not limited herein.

For example, the third threshold is 5%. When the overall space usage is greater than the first threshold and less than the second threshold, the size of the maximum available cache space of the hybrid SSD with the dynamic SLC capacity may be adjusted according to the foregoing formula (1) each time the overall space usage increases by 5%.

That is, in this embodiment, the maximum available cache space of the hybrid SSD with the dynamic SLC capacity may be adjusted between the first threshold and the second threshold at an interval of the third threshold as a dynamic adjustment point. Change of the maximum available cache space may not be continuous. When the overall space usage changes by the third threshold, the size of the maximum available cache space may be updated once.

In the foregoing implementation, the first threshold is the maximum overall space usage corresponding to the maximum SLC capacity of the hybrid SSD with the dynamic SLC capacity, and the second threshold is the minimum overall space usage corresponding to the minimum SLC capacity of the hybrid SSD with the dynamic SLC capacity. Optionally, in another possible implementation, the first threshold may alternatively be less than or greater than the maximum overall space usage corresponding to the maximum SLC capacity of the hybrid SSD with the dynamic SLC capacity, for example, the first threshold may be less than or greater than ml. The second threshold may alternatively be less than or greater than the minimum overall space usage corresponding to the minimum SLC capacity of the hybrid SSD with the dynamic SLC capacity, for example, the second threshold may be less than or greater than m2. Specific values of the first threshold and the second threshold are not limited in this application.

For example, in a possible example, the first threshold may be greater than or equal to the maximum overall space usage corresponding to the maximum SLC capacity of the hybrid SSD with the dynamic SLC capacity, and the second threshold may be less than or equal to the minimum overall space usage corresponding to the minimum SLC capacity of the hybrid SSD with the dynamic SLC capacity.

For another example, in another possible example, the first threshold may be less than or equal to the maximum overall space usage corresponding to the maximum SLC capacity of the hybrid SSD with the dynamic SLC capacity, and the second threshold may be greater than or equal to the minimum overall space usage corresponding to the minimum SLC capacity of the hybrid SSD with the dynamic SLC capacity.

Optionally, for a case in which the first threshold is less than or equal to the maximum overall space usage corresponding to the maximum SLC capacity of the hybrid SSD with the dynamic SLC capacity, and the second threshold is greater than or equal to the minimum overall space usage corresponding to the minimum SLC capacity of the hybrid SSD with the dynamic SLC capacity, in some possible implementation scenarios, the first threshold may be 0, and the second threshold may be 100%. That is, the hybrid SSD with the dynamic SLC capacity may be divided into an entire stage based on the overall space usage.

For another example, in another possible example, the first threshold may be less than or equal to the maximum overall space usage corresponding to the maximum SLC capacity of the hybrid SSD with the dynamic SLC capacity, and the second threshold may be less than or equal to the minimum overall space usage corresponding to the minimum SLC capacity of the hybrid SSD with the dynamic SLC capacity.

Optionally, for a case in which the first threshold is less than or equal to the maximum overall space usage corresponding to the maximum SLC capacity of the hybrid SSD with the dynamic SLC capacity, and the second threshold is less than or equal to the minimum overall space usage corresponding to the minimum SLC capacity of the hybrid SSD with the dynamic SLC capacity, in some possible implementation scenarios, the first threshold may be 0, and the second threshold may be less than m2. That is, the hybrid SSD with the dynamic SLC capacity may be divided into two stages: The overall space usage is greater than the first threshold and less than the second threshold, and the overall space usage is greater than or equal to the second threshold (a case in which the overall space usage is equal to 0 may be classified into an extreme case in which the overall space usage is greater than the first threshold and less than the second threshold).

For another example, in still another possible example, the first threshold may be greater than or equal to the maximum overall space usage corresponding to the maximum SLC capacity of the hybrid SSD with the dynamic SLC capacity, and the second threshold may be greater than or equal to the minimum overall space usage corresponding to the minimum SLC capacity of the hybrid SSD with the dynamic SLC capacity.

Optionally, for a case in which the first threshold is greater than or equal to the maximum overall space usage corresponding to the maximum SLC capacity of the hybrid SSD with the dynamic SLC capacity, and the second threshold is greater than or equal to the minimum overall space usage corresponding to the minimum SLC capacity of the hybrid SSD with the dynamic SLC capacity, in some possible implementation scenarios, the first threshold may be ml, and the second threshold may be 100%. That is, the hybrid SSD with the dynamic SLC capacity may be divided into two stages: The overall space usage is less than or equal to the first threshold, and the overall space usage is greater than the first threshold (a case in which the overall space usage is equal to the second threshold (that is, 100%) may be classified into an extreme case in which the overall space usage is greater than the first threshold).

It should be noted that neither the first threshold nor the second threshold in this embodiment of this application is a negative number.

The foregoing uses a plurality of different examples to show a manner of dividing the hybrid SSD with the dynamic SLC capacity into an entire stage, or two or three stages based on the values of the first threshold and the second threshold and the overall space usage, and adjusting the size of the maximum available cache space in each stage. Optionally, in some possible implementations, the hybrid SSD with the dynamic SLC capacity may be further divided into more stages based on the overall space usage, and the size of the maximum available cache space is adjusted in each stage. For example, the hybrid SSD with the dynamic SLC capacity may be first divided into an idle stage, a medium stage, and a heavy stage in the manner described in the foregoing embodiment. The medium stage may be further divided into a plurality of sub-stages. For example, the medium stage may be divided into S (S is an integer greater than 1) sub-stages with equal spacing or unequal spacing based on the overall space usage, and in each sub-stage the size of the maximum available cache space may be adjusted in a different manner (not limited to the foregoing formula (1)), so that the size of the maximum available cache space decreases as the overall space usage increases. For example, the size of the maximum available cache space decreases linearly or non-linearly as the overall space usage increases. However, it should be noted that a value of the maximum available cache space is less than or equal to the maximum SLC capacity, and the size of the maximum available cache space is in a decreasing trend as the overall space usage increases.

For example, when the overall space usage is the first overall space usage, the size of the adjusted maximum available cache space is the first value; or when the overall space usage is the second overall space usage, the size of the adjusted maximum available cache space is the second value. When the second overall space usage is greater than the first overall space usage, the second value is less than the first value.

It should be noted that, in this embodiment of this application, for a case in which the maximum available cache space in the foregoing embodiment changes discontinuously (for example, decreases), the second overall space usage and the first overall space usage may be overall space usages of the hybrid SSD with the dynamic SLC capacity in two different stages. Alternatively, for a case in which the maximum available cache space in the foregoing embodiment continuously changes (for example, decreases), the second overall space usage and the first overall space usage may alternatively be overall space usages of the hybrid SSD with the dynamic SLC capacity in a same stage. For division of the stages, refer to the descriptions in the foregoing embodiment.

It may be understood that, in the foregoing embodiment, the manner of adjusting the maximum available cache space of the hybrid SSD with the dynamic SLC capacity between the first threshold and the second threshold at an interval of the third threshold as a dynamic adjustment point may alternatively be considered as dividing the overall space usage between the first threshold and the second threshold into a plurality of sub-stages at an interval of the third threshold, but a size of corresponding maximum available cache space in each sub-stage is unchanged, a size of maximum available cache space changes between two adjacent sub-stages, and a manner of adjusting the maximum available cache space between any two adjacent sub-stages is the same.

The foregoing embodiment describes a manner of adjusting the size of the maximum available cache space in three cases: The overall space usage is less than or equal to the first threshold, the overall space usage is greater than the first threshold and less than the second threshold, and the overall space usage is greater than or equal to the second threshold. When the overall space usage is greater than or equal to the second threshold, the maximum available cache space of the hybrid SSD with the dynamic SLC capacity is adjusted, so that the size of the maximum available cache space is equal to the second capacity, and the second capacity is less than or equal to the capacity of the static SLC area of the hybrid SSD with the dynamic SLC capacity. Optionally, in some other embodiments, the second capacity may be less than or equal to a capacity of remaining available storage space of the hybrid SSD with the dynamic SLC capacity, or the second capacity may be less than or equal to a smaller one between a capacity of remaining available storage space of the hybrid SSD with the dynamic SLC capacity and the capacity of the static SLC area.

That is, when the overall space usage is greater than or equal to the second threshold, the size of the maximum available cache space is equal to the second capacity, and the second capacity may be less than or equal to a third capacity. The third capacity is the capacity of the static SLC area of the hybrid SSD with the dynamic SLC capacity, or the capacity of the remaining available storage space of the hybrid SSD with the dynamic SLC capacity, or a smaller one between the capacity of the static SLC area of the hybrid SSD with the dynamic SLC capacity and the capacity of the remaining available storage space.

The remaining available storage space of the hybrid SSD with the dynamic SLC capacity is space remained after the space occupied by the regular data is subtracted from the storage space of the hybrid SSD with the dynamic SLC capacity. For example, for the storage space of the hybrid SSD with the dynamic SLC capacity shown in FIG. 4, the remaining available storage space of the hybrid SSD with the dynamic SLC capacity may include the cached data storage space and the free space.

In the storage method provided in this embodiment of this application, by using the method for controlling the maximum available cache space, the overall space usage of the hybrid SSD with the dynamic SLC capacity can be reduced, a size of available SLC cache space can be maintained, and I/O performance of the hybrid SSD with the dynamic SLC capacity can be improved.

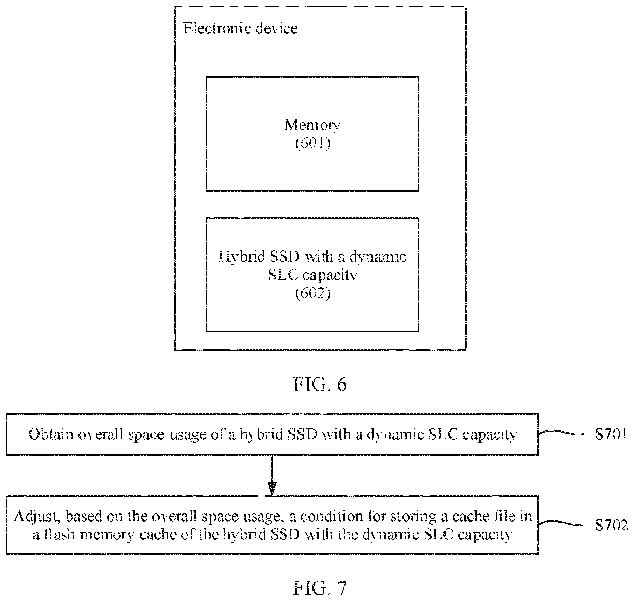

For example, FIG. 6 is a schematic diagram of composition of a storage device of an electronic device according to an embodiment of this application. As shown in FIG. 6, the electronic device may include a memory 601 and a hybrid SSD 602 with a dynamic SLC capacity.

The memory 601 may include one or more applications, a cache system (or referred to as a cache management system), and memory cache storage space (memory cache for short). For example, the application may include various networked applications such as chat software and a network video player.

The hybrid SSD 602 with the dynamic SLC capacity may include regular data storage space, flash memory cache storage space (namely, cached data storage space, flash memory cache for short), and free space.

When the application in the memory 601 proposes a network file request (or referred to as a file request), for example, a first application may propose a network file request, where the network file request may be used to request a first file, the cache system in the memory 601 may intercept the network file request, and determine whether the network file (namely, a first file) requested by the network file request is cached in the memory cache (namely, cache space of the memory) and the flash memory cache (namely, cache space of the hybrid SSD 602 with the dynamic SLC capacity). When the network file requested by the network file request is cached in the memory cache, the memory cache may return the corresponding network file to the application. When the network file requested by the network file request is cached in the flash memory cache, the flash memory cache may return the corresponding network file to the application. When neither the memory cache nor the flash memory cache caches the network file requested by the network file request, the electronic device may request, through a network, a remote end (for example, a server corresponding to the application, and the server) to cache the network file, and cache the network file in the memory cache.

When the memory cache space is fully occupied, the cache system may remove a file (for example, a second file) from the memory cache according to a removal policy. The removal policy is not limited in this application. The file removed from the memory cache may be cached in the flash memory cache. The cache system may adjust maximum available cache space of the hybrid SSD 602 with the dynamic SLC capacity based on overall space usage of the hybrid SSD 602 with the dynamic SLC capacity in the storage method provided in this embodiment of this application. When the file removed from the memory cache is cached in the flash memory cache, the cache system may remove the cache file (namely, cached data) from the flash memory cache according to the removal policy, so that space occupied by the cache file stored in the flash memory cache does not exceed the maximum available cache space.

For example, the cache system may include a cache space management module. The cache space management module may be configured to implement the foregoing function of adjusting the maximum available cache space of the hybrid SSD 602 with the dynamic SLC capacity based on the overall space usage of the hybrid SSD 602 with the dynamic SLC capacity.

Optionally, in the method provided in this embodiment of this application, each time after the size of the maximum available cache space is adjusted, if the space occupied by the cache file in the flash memory cache exceeds updated maximum available cache space, the cache file in the flash memory cache may be removed according to the removal policy, so that space occupied by the cache file stored in the flash memory cache does not exceed the updated maximum available cache space.

Optionally, in this embodiment of this application, when the overall space usage of the hybrid SSD 602 with the dynamic SLC capacity reaches 100%, if the regular data storage space needs to continue to increase, the maximum available cache space may be compressed, and the cache file in the flash memory cache is removed, to free up space for regular data.

The foregoing embodiment describes a process of adjusting the maximum available cache space of the hybrid SSD with the dynamic SLC capacity based on the overall space usage in the storage method provided in this embodiment of this application. Optionally, in some other embodiments, in the storage method provided in this embodiment of this application, a condition for storing the cache file in the cached data storage space (referred to as a flash memory cache below) of the hybrid SSD with the dynamic SLC capacity may be further dynamically adjusted based on the overall space usage of the hybrid SSD with the dynamic SLC capacity. The electronic device may determine, according to the condition for storing the cache file in the flash memory cache of the hybrid SSD with the dynamic SLC capacity, whether the cache file should be stored in the flash memory cache. For example, these cache files may be files that are removed from the memory cache. In this method, the condition for storing the cache file in the flash memory cache of the hybrid SSD with the dynamic SLC capacity is dynamically adjusted based on the overall space usage of the hybrid SSD with the dynamic SLC capacity, to control file writing to the hybrid SSD with the dynamic SLC capacity and maintain I/O performance of the hybrid SSD with the dynamic SLC capacity in a good state.

For example, FIG. 7 is another schematic flowchart of a storage method according to an embodiment of this application. As shown in FIG. 7, the method may include the following steps.

S701: Obtain overall space usage of a hybrid SSD with a dynamic SLC capacity.

For a specific implementation process of S701, refer to the foregoing S301. Details are not described herein again.

S702: Dynamically adjust, based on the overall space usage, a condition for storing a cache file in a flash memory cache of the hybrid SSD with the dynamic SLC capacity.

In some embodiments, a cache system of an electronic device may use a least frequently used (least frequently used, LFU) policy as a file management policy of a flash memory cache. S702 may include: when the overall space usage is less than or equal to a first threshold, adjusting the condition for storing the cache file in the flash memory cache of the hybrid SSD with the dynamic SLC capacity to that a quantity of file operation (for example, a read/write operation) hits of the cache file in the memory is greater than or equal to a first quantity (the first quantity is an integer greater than 0), that is, when the quantity of file operation hits of the cache file in the memory is greater than or equal to the first quantity, the cache file can be stored in the flash memory cache of the hybrid SSD with the dynamic SLC capacity; when the overall space usage is greater than the first threshold and less than a second threshold, where the second threshold is greater than the first threshold, adjusting the condition for storing the cache file in the flash memory cache of the hybrid SSD with the dynamic SLC capacity to that the quantity of file operation hits of the cache file in the memory is greater than or equal to a second quantity (the second quantity is an integer greater than 0), where the second quantity is greater than the first quantity, that is, when the quantity of file operation hits of the cache file in the memory is greater than or equal to the second quantity, the cache file can be stored in the flash memory cache of the hybrid SSD with the dynamic SLC capacity; or when the overall space usage is greater than or equal to the second threshold, adjusting the condition for storing the cache file in the flash memory cache of the hybrid SSD with the dynamic SLC capacity to that the quantity of file operation hits of the cache file in the memory is greater than or equal to a third quantity (the third quantity is an integer greater than 0), where the third quantity is greater than the second quantity, that is, when the quantity of file operation hits of the cache file in the memory is greater than or equal to the third quantity, the cache file can be stored in the flash memory cache of the hybrid SSD with the dynamic SLC capacity.

For values of the first threshold and the second threshold, refer to the descriptions in the foregoing embodiment. Details are not described again.

In this embodiment, the first quantity is less than the second quantity, the second quantity is less than the third quantity, and in a process in which the overall space usage changes from a stage in which the overall space usage is less than or equal to the first threshold, to a stage in which the overall space usage is greater than the first threshold and less than the second threshold, and then to a stage in which the overall space usage is greater than or equal to the second threshold, the condition for storing the cache file in the flash memory cache of the hybrid SSD with the dynamic SLC capacity is increasingly strict, so that I/O performance of the hybrid SSD with the dynamic SLC capacity can be maintained in a good state.

For example, in some possible implementations, the second quantity may be an integer multiple of the first quantity. For example, the first quantity may be L, and the second quantity may be 2×L ("×" represents multiplication). The third quantity may be an integer multiple of the second quantity. For example, the third quantity may be 4×L. In some other possible implementations, the second quantity may not be an integer multiple of the first quantity. For example, the first quantity may be L, and the second quantity may be L+L1. Alternatively, the third quantity may not be an integer multiple of the second quantity. For example, the third quantity may be L+L1+L2. Specific values of the first quantity, the second quantity, and the third quantity are not limited in this application.

In some other embodiments, the file management policy of the cache system of the electronic device for the flash memory cache may be a file size-based management policy. S702 may include: when the overall space usage is less than or equal to a first threshold, adjusting the condition for storing the cache file in the flash memory cache of the hybrid SSD with the dynamic SLC capacity to that a size of the cache file is less than or equal to a first byte (the first byte is a value greater than 0), that is, when the size of the cache file is less than or equal to the first byte, the cache file can be stored in the flash memory cache of the hybrid SSD with the dynamic SLC capacity; when the overall space usage is greater than the first threshold and less than a second threshold, where the second threshold is greater than the first threshold, adjusting the condition for storing the cache file in the flash memory cache of the hybrid SSD with the dynamic SLC capacity to that the size of the cache file is less than or equal to a second byte (the second byte is a value greater than 0), where the second byte is less than the first byte, that is, when the size of the cache file is less than or equal to the second byte, the cache file can be stored in the flash memory cache of the hybrid SSD with the dynamic SLC capacity; or when the overall space usage is greater than or equal to the second threshold, adjusting the condition for storing the cache file in the flash memory cache of the hybrid SSD with the dynamic SLC capacity to that the size of the cache file is less than or equal to a third byte (the third byte is a value greater than 0), where the third byte is less than the second byte, that is, when the size of the cache file is less than or equal to the third byte, the cache file can be stored in the flash memory cache of the hybrid SSD with the dynamic SLC capacity.

For values of the first threshold and the second threshold, refer to the descriptions in the foregoing embodiment. Details are not described again.

In this embodiment, the third byte is less than the second byte, the second byte is less than the first byte, and in a process in which the overall space usage changes from a stage in which the overall space usage is less than or equal to the first threshold, to a stage in which the overall space usage is greater than the first threshold and less than the second threshold, and then to a stage in which the overall space usage is greater than or equal to the second threshold, a cache file that can meet the condition for storing the cache file in the flash memory cache of the hybrid SSD with the dynamic SLC capacity becomes smaller, so that I/O performance of the hybrid SSD with the dynamic SLC capacity can be maintained in a good state.

For example, in some possible implementations, the first byte may be an integer multiple of the second byte, and the second byte may be an integer multiple of the third byte. For example, the first byte may be B bytes, the second byte may be B/2 bytes ("/" represents division by), and the third byte may be B/4 bytes. In some other possible implementations, the first byte, the second byte, and the third byte may not be in a relationship of an integer multiple. For example, the first byte may be B bytes, the second byte may be B-B1 bytes, and the third byte may be B-B1-B2 bytes.

Optionally, the foregoing embodiment shows a manner of dynamically adjusting the condition for storing the cache file in the flash memory cache of the hybrid SSD with the dynamic SLC capacity in three cases: the overall space usage is less than or equal to the first threshold, the overall space usage is greater than the first threshold and less than the second threshold, and the overall space usage is greater than or equal to the second threshold. When the overall space usage is greater than the first threshold and less than the second threshold, the condition for storing the cache file in the flash memory cache of the hybrid SSD with the dynamic SLC capacity is always the same. In some other embodiments, when the overall space usage is greater than the first threshold and less than the second threshold, the condition for storing the cache file in the flash memory cache of the hybrid SSD with the dynamic SLC capacity may be adjusted, so that the condition for storing the cache file in the flash memory cache of the hybrid SSD with the dynamic SLC capacity becomes increasingly strict as the overall space usage increases.

For example, when the cache system of the electronic device uses the LFU policy as the file management policy of the flash memory cache, when the overall space usage is greater than the first threshold and less than the second threshold, the condition for storing the cache file in the flash memory cache of the hybrid SSD with the dynamic SLC capacity may be adjusted to that the quantity of file operation hits of the cache file in the memory is greater than or equal to the second quantity, and the second quantity increases as the overall space usage increases.

For another example, when the file management policy of the cache system of the electronic device for the flash memory cache is the file size-based management policy, when the overall space usage is greater than the first threshold and less than the second threshold, the condition for storing the cache file in the flash memory cache of the hybrid SSD with the dynamic SLC capacity may be adjusted to that the size of the cache file is less than or equal to the second byte, and the second byte decreases as the overall space usage increases.

Optionally, in some possible implementations, the hybrid SSD with the dynamic SLC capacity may be further divided into more stages based on the overall space usage, and the condition for storing the cache file in the flash memory cache of the hybrid SSD with the dynamic SLC capacity is adjusted in each stage. For example, the hybrid SSD with the dynamic SLC capacity may be first divided into an idle stage, a medium stage, and a heavy stage in the manner described in the foregoing embodiment. The medium stage may be further divided into a plurality of sub-stages. For example, the medium stage may be divided into S (S is an integer greater than 1) sub-stages with equal spacing or unequal spacing based on the overall space usage. In each sub-stage, the condition for storing the cache file in the flash memory cache of the hybrid SSD with the dynamic SLC capacity may be adjusted in a different manner, so that the condition for storing the cache file in the flash memory cache of the hybrid SSD with the dynamic SLC capacity becomes stricter as the overall space usage increases. For example, the second quantity increases linearly or non-linearly as the overall space usage increases, or the second byte decreases linearly or non-linearly as the overall space usage increases.

For example, when the overall space usage is third overall space usage, an adjusted condition includes: the quantity of file operation hits of the cache file in the memory of the electronic device in which the hybrid SSD with the dynamic SLC capacity is located is greater than or equal to a third value, and/or the size of the cache file is less than or equal to a fourth value; or when the overall space usage is fourth overall space usage, the adjusted condition includes: the quantity of file operation hits of the cache file in the memory of the electronic device in which the hybrid SSD with the dynamic SLC capacity is located is greater than or equal to a fifth value, and/or the size of the cache file is less than or equal to a sixth value. When the fourth overall space usage is greater than the third overall space usage, the fifth value is greater than the third value, and the sixth value is less than the fourth value.

It should be noted that, in this embodiment of this application, when the condition for storing the cache file in the flash memory cache of the hybrid SSD with the dynamic SLC capacity in the foregoing embodiment continuously changes, the third overall space usage and the fourth overall space usage may be overall space usages of the hybrid SSD with the dynamic SLC capacity in a same stage. Alternatively, when the condition for storing the cache file in the flash memory cache of the hybrid SSD with the dynamic SLC capacity in the foregoing embodiment changes discontinuously, the third overall space usage and the fourth overall space usage may be overall space usages of the hybrid SSD with the dynamic SLC capacity in different stages. For division of the stages, refer to the descriptions in the foregoing embodiment.

In the storage method provided in this embodiment of this application, the condition for storing the cache file in the flash memory cache of the hybrid SSD with the dynamic SLC capacity is dynamically adjusted, so that a quantity of times of caching an invalid cache file can be reduced, writing to the hybrid SSD with the dynamic SLC capacity is reduced, and I/O performance of the hybrid SSD with the dynamic SLC capacity is optimized.

For example, the composition of the storage device of the electronic device shown in FIG. 6 is used as an example. When the memory cache of the memory 601 is fully occupied, a subsequent network file request may cause a cache operation of a new network file. In this case, the cache system needs to remove a cache file in the memory cache according to a removal policy (or referred to as a cache management policy). The cache system may determine, based on the condition that is dynamically adjusted in the storage method provided in this embodiment of this application and that is for storing the cache file in the flash memory cache of the hybrid SSD with the dynamic SLC capacity, whether the cache file removed from the memory cache can be cached in the flash memory cache of the hybrid SSD 602 with the dynamic SLC capacity. When the cache file (for example, the second file) removed from the memory cache meets the condition for storing the cache file in the flash memory cache of the hybrid SSD with the dynamic SLC capacity, the cache file removed from the memory cache may be stored in the flash memory cache; or when the cache file removed from the memory cache does not meet the condition for storing the cache file in the flash memory cache of the hybrid SSD with the dynamic SLC capacity, the cache file removed from the memory cache may be deleted or the cache file removed from the memory cache may be refused to be stored in the flash memory cache.

For example, the cache system may include a cache file filtering module. The cache file filtering module may be configured to implement the function of dynamically adjusting, based on the overall space usage, the condition for storing the cache file in the flash memory cache of the hybrid SSD with the dynamic SLC capacity, and a function of filtering the cache file based on the condition for storing the cache file in the flash memory cache of the hybrid SSD with the dynamic SLC capacity.

Optionally, in this embodiment of this application, the cache system may provide an interface for managing cache space. The interface may be configured to access different cache management algorithms. The cache management algorithms may be used to manage the memory cache and the flash memory cache. A cache management policy for the memory cache and the flash memory cache is not limited in this application.

In some embodiments, the cache system of the electronic device may use the LFU policy and the file size-based management policy as the file management policy of the flash memory cache at the same time. The foregoing embodiment about the LFU policy and the embodiment about the file size-based management policy may alternatively have a combination relationship, that is, the condition for storing the cache file in the flash memory cache of the hybrid SSD with the dynamic SLC capacity may include the quantity of file operation hits of the cache file in the memory and the size of the cache file. According to the method provided in this embodiment of this application, the quantity of file operation hits of the cache file in the memory and the size of the cache file in the condition for storing the cache file in the flash memory cache of the hybrid SSD with the dynamic SLC capacity may be adjusted at the same time. An adjustment manner is described in the foregoing embodiment.

It should be noted that the hybrid SSD with the dynamic SLC capacity is used as an example in the foregoing embodiments to describe the storage method provided in embodiments of this application. In some other possible embodiments, the storage method provided in embodiments of this application is further applicable to another storage device that may mix a hybrid high-speed medium and a low-speed medium. For example, storage space of the storage device may include a multi-level cell area, a dynamic SLC area, and a static SLC area. A specific type of the storage device is not limited in this application.

Optionally, the embodiment shown in FIG. 7 may be implemented as a separate embodiment, or may be implemented as a whole with the embodiment shown in FIG. 3. This is not limited herein.

It should be understood that the foregoing embodiments are merely examples for describing the storage method provided in embodiments of this application. In some other possible implementations, some execution steps may be deleted or added in the foregoing embodiments, or a sequence of some steps in the foregoing embodiments may be adjusted. This is not limited in this application.

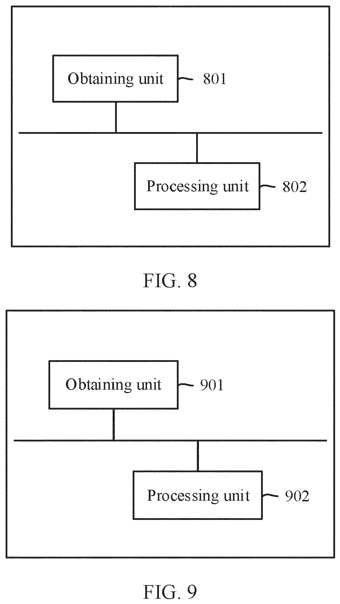

Corresponding to the storage method in the foregoing embodiments, an embodiment of this application provides a storage apparatus. The apparatus may be applied to the foregoing electronic device, and is configured to implement the storage method in the foregoing embodiments. A function of the apparatus may be implemented by hardware, or may be implemented by executing corresponding software by hardware. The hardware or the software includes one or more modules or units corresponding to the steps of the foregoing storage method. FIG. 8 is a schematic diagram of a structure of a storage apparatus according to an embodiment of this application. As shown in FIG. 8, the apparatus may include an obtaining unit 801, a processing unit 802, and the like. The obtaining unit 801 and the processing unit 802 may cooperate to implement the storage method described in the foregoing embodiments.

For example, the obtaining unit 801 may be configured to obtain overall space usage of a storage device, where the storage device includes working in a multi-level cell area, a dynamic single-level cell area, and a static single-level cell area, and the overall space usage is determined based on a size of storage space of the storage device and a size of a used area in the storage space of the storage device. The processing unit 802 may be configured to adjust a size of maximum available cache space of the storage device based on the overall space usage, where the maximum available cache space is maximum storage space that is allowed to be occupied by cached data when the cached data is stored in the storage device.

When the overall space usage is first overall space usage, a size of the dynamic single-level cell area is a fourth capacity, and an adjusted size of the maximum available cache space is a first value; or when the overall space usage is second overall space usage, the size of the dynamic single-level cell area is a fifth capacity, and the adjusted size of the maximum available cache space is a second value, where the second overall space usage is greater than the first overall space usage, the fifth capacity is less than the fourth capacity, and the second value is less than the first value.

In a possible implementation, when the overall space usage is less than or equal to a first threshold, the size of the maximum available cache space is equal to a first capacity, and the first capacity is less than or equal to a maximum single-level cell capacity of the storage device and is greater than a capacity of the static single-level cell area of the storage device, where the maximum single-level cell capacity is a sum of capacities of the dynamic single-level cell area and the static single-level cell area that exist when the dynamic single-level cell area of the storage device is the largest.

When the overall space usage is greater than the first threshold and less than a second threshold, the size of the maximum available cache space decreases as the overall space usage increases, where the second threshold is greater than the first threshold.

When the overall space usage is greater than or equal to the second threshold, the size of the maximum available cache space is equal to a second capacity, and the second capacity is less than or equal to a third capacity, where the third capacity is the capacity of the static single-level cell area of the storage device, or a capacity of remaining available storage space of the storage device, or a smaller one of the capacity of the static single-level cell area of the storage device and the capacity of the remaining available storage space; and the remaining available storage space of the storage device is space remained after space occupied by regular data is subtracted from storage of the storage device, and the regular data includes data generated by a local user of an electronic device in which the storage device is located.

In a possible example, the first threshold is equal to maximum overall space usage corresponding to a maximum single-level cell capacity of the storage device, and the second threshold is equal to minimum overall space usage corresponding to a minimum single-level cell capacity of the storage device.

In another possible example, the first threshold is less or greater than maximum overall space usage corresponding to a maximum single-level cell capacity of the storage device, and the second threshold is less or greater than minimum overall space usage corresponding to a minimum single-level cell capacity of the storage device.

In a possible implementation, the processing unit 802 is specifically configured to: when the overall space usage is greater than the first threshold and less than the second threshold, and the overall space usage changes by a third threshold, adjust the size of the maximum available cache space of the storage device based on the overall space usage.

In a possible implementation, the processing unit 802 is further configured to: receive a file request proposed by a first application, where the file request is used to request a first file, and the first application is an application in a memory of the electronic device in which the storage device is located; when neither cache space of the memory nor cache space of the storage device caches the first file, obtain the first file from a server, and cache the first file in the cache space of the memory; when the cache space of the memory is fully occupied, remove a second file from the cache space of the memory; and cache the second file in the cache space of the storage device, where storage space occupied by cached data stored in the cache space of the storage device does not exceed the maximum available cache space.

Optionally, the processing unit 802 is further configured to: when the first file is cached in the cache space of the memory, read the first file from the cache space of the memory, and return the first file to the first application; and when the first file is cached in the cache space of the storage device, read the first file from the cache space of the storage device, and return the first file to the first application.

Optionally, the processing unit 802 is further configured to dynamically adjust, based on the overall space usage, a condition for storing a cache file in the storage device.

When the overall space usage is third overall space usage, an adjusted condition includes: a quantity of file operation hits of the cache file in the memory of the electronic device in which the storage device is located is greater than or equal to a third value, and/or a size of the cache file is less than or equal to a fourth value; or when the overall space usage is fourth overall space usage, the adjusted condition includes: the quantity of file operation hits of the cache file in the memory of the electronic device in which the storage device is located is greater than or equal to a fifth value, and/or the size of the cache file is less than or equal to a sixth value. The fourth overall space usage is greater than the third overall space usage, the fifth value is greater than the third value, and the sixth value is less than the fourth value.

In a possible implementation, when the overall space usage is less than or equal to the first threshold, the adjusted condition includes: the quantity of file operation hits of the cache file in the memory of the electronic device in which the storage device is located is greater than or equal to a first quantity, and/or the size of the cache file is less than or equal to a first byte.

When the overall space usage is greater than the first threshold and less than the second threshold, the adjusted condition includes: the quantity of file operation hits of the cache file in the memory of the electronic device in which the storage device is located is greater than or equal to a second quantity, and/or the size of the cache file is less than or equal to a second byte. The second threshold is greater than the first threshold, the second quantity is greater than the first quantity, and the second byte is less than the first byte.

When the overall space usage is greater than or equal to the second threshold, the adjusted condition includes: the quantity of file operation hits of the cache file in the memory of the electronic device in which the storage device is located is greater than or equal to a third quantity, and/or the size of the cache file is less than or equal to a third byte. The third quantity is greater than the second quantity, and the third byte is less than the second byte.

Optionally, the second quantity increases as the overall space usage increases, and/or the second byte decreases as the overall space usage increases.

In a possible implementation, the processing unit 802 is further configured to: receive the file request proposed by the first application, where the file request is used to request the first file, and the first application is an application in the memory of the electronic device in which the storage device is located; when neither the cache space of the memory nor the cache space of the storage device caches the first file, obtain the first file from the server, and cache the first file in the cache space of the memory; when the cache space of the memory is fully occupied, remove the second file from the cache space of the memory; and when the second file meets the adjusted condition, cache the second file in the cache space of the storage device.

Similarly, the obtaining unit 801 and the processing unit 802 may cooperate to implement functions corresponding to all steps of the storage method described in the foregoing embodiments, and details are not described herein again.

Corresponding to the storage method in the foregoing embodiments, an embodiment of this application further provides a storage apparatus. FIG. 9 is another schematic diagram of a structure of a storage apparatus according to an embodiment of this application. As shown in FIG. 9, the apparatus may include an obtaining unit 901, a processing unit 902, and the like.

The obtaining unit 901 may be configured to obtain overall space usage of a storage device, where the storage device includes working in a multi-level cell area, a dynamic single-level cell area, and a static single-level cell area, and the overall space usage is determined based on a size of storage space of the storage device and a size of a used area in the storage space of the storage device.

The processing unit 902 may be configured to dynamically adjust, based on the overall space usage, a condition for storing a cache file in the storage device.

When the overall space usage is third overall space usage, a size of the dynamic single-level cell area is a fourth capacity, and an adjusted condition includes: a quantity of file operation hits of the cache file in a memory of an electronic device in which the storage device is located is greater than or equal to a third value, and/or a size of the cache file is less than or equal to a fourth value. When the overall space usage is fourth overall space usage, the size of the dynamic single-level cell area is a fifth capacity, and the adjusted condition includes: the quantity of file operation hits of the cache file in the memory of the electronic device in which the storage device is located is greater than or equal to a fifth value, and/or the size of the cache file is less than or equal to a sixth value. The fourth overall space usage is greater than the third overall space usage, the fifth capacity is less than the fourth capacity, the fifth value is greater than the third value, and the sixth value is less than the fourth value.

In a possible implementation, when the overall space usage is less than or equal to a first threshold, the adjusted condition includes: the quantity of file operation hits of the cache file in the memory of the electronic device in which the storage device is located is greater than or equal to a first quantity, and/or the size of the cache file is less than or equal to a first byte; or when the overall space usage is greater than the first threshold and less than a second threshold, an adjusted condition includes: the quantity of file operation hits of the cache file in the memory of the electronic device in which the storage device is located is greater than or equal to a second quantity, and/or the size of the cache file is less than or equal to a second byte. The second threshold is greater than the first threshold, the second quantity is greater than the first quantity, and the second byte is less than the first byte. When the overall space usage is greater than or equal to the second threshold, the adjusted condition includes: the quantity of file operation hits of the cache file in the memory of the electronic device in which the storage device is located is greater than or equal to a third quantity, and/or the size of the cache file is less than or equal to a third byte. The third quantity is greater than the second quantity, and the third byte is less than the second byte.

In a possible example, the first threshold is equal to maximum overall space usage corresponding to a maximum single-level cell capacity of the storage device, and the second threshold is equal to minimum overall space usage corresponding to a minimum single-level cell capacity of the storage device.

In another possible example, the first threshold is less or greater than maximum overall space usage corresponding to a maximum single-level cell capacity of the storage device, and the second threshold is less or greater than minimum overall space usage corresponding to a minimum single-level cell capacity of the storage device.

Optionally, the second quantity increases as the overall space usage increases, and/or the second byte decreases as the overall space usage increases.

In a possible implementation, the processing unit 902 is further configured to: receive a file request proposed by a first application, where the file request is used to request a first file, and the first application is an application in the memory of the electronic device in which the storage device is located; when neither cache space of the memory nor cache space of the storage device caches the first file, obtain the first file from a server, and cache the first file in the cache space of the memory; when the cache space of the memory is fully occupied, remove a second file from the cache space of the memory; and when the second file meets the adjusted condition, cache the second file in the cache space of the storage device.

Optionally, the processing unit 902 is further configured to: when the first file is cached in the cache space of the memory, read the first file from the cache space of the memory, and return the first file to the first application; and when the first file is cached in the cache space of the storage device, read the first file from the cache space of the storage device, and return the first file to the first application.

It should be understood that division into modules (or referred to as units) in the foregoing apparatus is merely logical function division. In actual implementation, all or some of the modules may be integrated into one physical entity, or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in the foregoing apparatuses may be one or more integrated circuits configured to implement the foregoing method, for example, one or more application specific integrated circuits (application specific integrated circuits, ASICs), one or more digital signal processors (digital signal processors, DSPs), one or more field programmable gate arrays (field programmable gate arrays, FPGAs), or a combination of at least two of these integrated circuit forms.

For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

In an implementation, units that implement corresponding steps in the foregoing method in the foregoing apparatus may be implemented by using a processing element to schedule a program. For example, the apparatus may include a processing element and a storage element. The processing element invokes a program stored in the storage element, to perform the storage method in the foregoing method embodiments. The storage element may be a storage element whose processing element is located on a same chip, that is, an on-chip storage element.

In another implementation, the program for performing the foregoing method may be in a storage element on a chip different from that of the processing element, that is, an off-chip storage element. In this case, the processing element invokes a program from the off-chip storage element or loads a program on the on-chip storage element, to invoke and perform the storage method in the foregoing method embodiments.

Embodiments of this application further provide an electronic device. The electronic device may be the foregoing electronic device. The electronic device includes: a processor, and a memory configured to store instructions executable by the processor. When the processor is configured to execute the instructions, the electronic device is enabled to implement the storage method described in the foregoing embodiments. The memory may be located inside the electronic device, or may be located outside the electronic device. There are one or more processors.

For example, the electronic device may be a terminal device, a server, or a virtual machine (virtual machine, VM). The terminal device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device/a virtual reality (virtual reality, VR) device, or the like. A specific form of the electronic device is not specifically limited in this embodiment of this application.

In another implementation, units used by the electronic device to implement the steps in the foregoing methods may be configured as one or more processing elements. The processing element herein may be an integrated circuit, for example, one or more ASICs, one or more DSPs, one or more FPGAs, or a combination of these integrated circuits. These integrated circuits may be integrated together to form a chip.

For example, an embodiment of this application further provides a chip, and the chip may be applied to the foregoing electronic device. The chip includes one or more interface circuits and one or more processors. The interface circuit and the processor are interconnected by using a line. The processor receives and executes computer instructions from a memory of the electronic device by using the interface circuit, to implement the storage method described in the foregoing embodiments.

The foregoing descriptions about implementations allow a person skilled in the art to clearly understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium.

Based on such an understanding, the technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

For example, an embodiment of this application further provides a computer-readable storage medium, the computer-readable storage medium stores computer program instructions, and when the computer program instructions are executed by an electronic device, the electronic device is enabled to implement the storage method according to embodiments.

For another example, an embodiment of this application further provides a computer program product, the computer program product includes computer-readable code or a non-volatile computer-readable storage medium carrying computer-readable code, and when the computer-readable code is run in an electronic device, a processor in the electronic device implements the storage method according to the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A storage method, wherein the method comprises:

   obtaining overall space usage of a storage device, wherein the storage device comprises working in a multi-level cell area, a dynamic single-level cell area, and a static single-level cell area, and the overall space usage is determined based on a size of storage space of the storage device and a size of a used area in the storage space of the storage device; and
   adjusting a size of maximum available cache space of the storage device based on the overall space usage, wherein the maximum available cache space is maximum storage space that is allowed to be occupied by cached data when the cached data is stored in the storage device, wherein
   when the overall space usage is first overall space usage, a size of the dynamic single-level cell area is a fourth capacity, and an adjusted size of the maximum available cache space is a first value; or when the overall space usage is second overall space usage, the size of the dynamic single-level cell area is a fifth capacity, and the adjusted size of the maximum available cache space is a second value, wherein the second overall space usage is greater than the first overall space usage, the fifth capacity is less than the fourth capacity, and the second value is less than the first value.

2. The method according to claim 1, wherein when the overall space usage is less than or equal to a first threshold, the size of the maximum available cache space is equal to a first capacity, and the first capacity is less than or equal to a maximum single-level cell capacity of the storage device, and is greater than a capacity of the static single-level cell area of the storage device, wherein the maximum single-level cell capacity is a sum of capacities of the dynamic single-level cell area and the static single-level cell area that exist when the dynamic single-level cell area of the storage device is the largest;

   when the overall space usage is greater than the first threshold and less than a second threshold, the size of the maximum available cache space decreases as the overall space usage increases, wherein the second threshold is greater than the first threshold; or
   when the overall space usage is greater than or equal to the second threshold, the size of the maximum available cache space is equal to a second capacity, and the second capacity is less than or equal to a third capacity, wherein the third capacity is the capacity of the static single-level cell area of the storage device, or a capacity of remaining available storage space of the storage device, or a smaller one of the capacity of the static single-level cell area of the storage device and the capacity of the remaining available storage space; and the remaining available storage space of the storage device is space remained after space occupied by regular data is subtracted from storage of the storage device, and the regular data comprises data generated by a local user of an electronic device in which the storage device is located.

3. The method according to claim 2, wherein the first threshold is equal to maximum overall space usage corresponding to the maximum single-level cell capacity of the storage device; and the second threshold is equal to minimum overall space usage corresponding to a minimum single-level cell capacity of the storage device.

4. The method according to claim 2, wherein the first threshold is less than or greater than maximum overall space usage corresponding to the maximum single-level cell capacity of the storage device; and the second threshold is less than or greater than minimum overall space usage corresponding to a minimum single-level cell capacity of the storage device.

5. The method according to any one of claims 2 to 4, wherein the adjusting a size of maximum available cache space of the storage device based on the overall space usage comprises: when the overall space usage is greater than the first threshold and less than the second threshold, and the overall space usage changes by a third threshold, adjusting the size of the maximum available cache space of the storage device based on the overall space usage.

6. The method according to any one of claims 1 to 5, wherein the method further comprises:

   receiving a file request proposed by a first application, wherein the file request is used to request a first file, and the first application is an application in a memory of the electronic device in which the storage device is located; when neither cache space of the memory nor cache space of the storage device caches the first file, obtaining the first file from a server, and caching the first file in the cache space of the memory; when the cache space of the memory is fully occupied, removing a second file from the cache space of the memory; and caching the second file in the cache space of the storage device, wherein storage space occupied by cached data stored in the cache space of the storage device does not exceed the maximum available cache space.

7. The method according to claim 6, wherein the method further comprises:

   when the first file is cached in the cache space of the memory, reading the first file from the cache space of the memory, and returning the first file to the first application; and when the first file is cached in the cache space of the storage device, reading the first file from the cache space of the storage device, and returning the first file to the first application.

8. The method according to any one of claims 1 to 7, wherein the method further comprises:

   dynamically adjusting, based on the overall space usage, a condition for storing a cache file in the storage device, wherein when the overall space usage is third overall space usage, an adjusted condition comprises: a quantity of file operation hits of the cache file in the memory of the electronic device in which the storage device is located is greater than or equal to a third value, and/or a size of the cache file is less than or equal to a fourth value; or when the overall space usage is fourth overall space usage, the adjusted condition comprises: the quantity of file operation hits of the cache file in the memory of the electronic device in which the storage device is located is greater than or equal to a fifth value, and/or the size of the cache file is less than or equal to a sixth value, wherein the fourth overall space usage is greater than the third overall space usage, the fifth value is greater than the third value, and the sixth value is less than the fourth value.

9. The method according to claim 8, wherein when the overall space usage is less than or equal to the first threshold, the adjusted condition comprises: the quantity of file operation hits of the cache file in the memory of the electronic device in which the storage device is located is greater than or equal to a first quantity, and/or the size of the cache file is less than or equal to a first byte;

   when the overall space usage is greater than the first threshold and less than the second threshold, the adjusted condition comprises: the quantity of file operation hits of the cache file in the memory of the electronic device in which the storage device is located is greater than or equal to a second quantity, and/or the size of the cache file is less than or equal to a second byte, wherein the second threshold is greater than the first threshold, the second quantity is greater than the first quantity, and the second byte is less than the first byte; or

when the overall space usage is greater than or equal to the second threshold, the adjusted condition comprises: the quantity of file operation hits of the cache file in the memory of the electronic device in which the storage device is located is greater than or equal to a third quantity, and/or the size of the cache file is less than or equal to a third byte, wherein the third quantity is greater than the second quantity, and the third byte is less than the second byte.

10. The method according to claim 9, wherein the second quantity increases as the overall space usage increases, and/or the second byte decreases as the overall space usage increases.

11. The method according to any one of claims 8 to 10, wherein the method further comprises:

receiving the file request proposed by the first application, wherein the file request is used to request the first file, and the first application is an application in the memory of the electronic device in which the storage device is located; when neither the cache space of the memory nor the cache space of the storage device caches the first file, obtaining the first file from the server, and caching the first file in the cache space of the memory; when the cache space of the memory is fully occupied, removing the second file from the cache space of the memory; and when the second file meets the adjusted condition, caching the second file in the cache space of the storage device.

12. A storage apparatus, wherein the apparatus comprises:

an obtaining unit, configured to obtain overall space usage of a storage device, wherein the storage device comprises working in a multi-level cell area, a dynamic single-level cell area, and a static single-level cell area, and the overall space usage is determined based on a size of storage space of the storage device and a size of a used area in the storage space of the storage device; and

a processing unit, configured to adjust a size of maximum available cache space of the storage device based on the overall space usage, wherein the maximum available cache space is maximum storage space that is allowed to be occupied by cached data when the cached data is stored in the storage device, wherein when the overall space usage is first overall space usage, a size of the dynamic single-level cell area is a fourth capacity, and an adjusted size of the maximum available cache space is a first value; or when the overall space usage is second overall space usage, the size of the dynamic single-level cell area is a fifth capacity, and the adjusted size of the maximum available cache space is a second value, wherein the second overall space usage is greater than the first overall space usage, the fifth capacity is less than the fourth capacity, and the second value is less than the first value.

13. An electronic device, comprising a processor and a memory configured to store executable instructions of the processor, wherein when the processor is configured to execute the instructions, the electronic device is enabled to implement the method according to any one of claims 1 to 11.

14. A computer-readable storage medium, storing computer program instructions, wherein when the computer program instructions are executed by an electronic device, the electronic device is enabled to implement the method according to any one of claims 1 to 11.

15. A computer program product, comprising computer-readable code or a non-volatile computer-readable storage medium carrying computer-readable code, wherein when the computer-readable code is run in an electronic device, a processor in the electronic device implements the method according to any one of claims 1 to 11.

FIG. 1

Antenna 1

Antenna 2

| Mobile communication module 2G/3G/4G/5G [250] | Wireless communication module BT/WLAN/GNSS/NFC/IR/FM [260] |

| Speaker [270A] | | Sensor module [280] |
| Receiver [270B] | Audio module [270] | Pressure sensor [280A] |
| Microphone [270C] | | Gyroscope sensor [280B] |
| Headset jack [270D] | | Barometric pressure sensor [280C] |

Display [294] (touchscreen)

Cameras 1 to N [293]

Indicator [292]

Motor [291]

Button [290]

Internal memory [221]

SIM card interfaces1 to N [295]

External memory interface [220]

Processor [210]

Magnetic sensor [280D]

Acceleration sensor [280E]

Distance sensor [280F]

Optical proximity sensor [280G]

Fingerprint sensor [280H]

Temperature sensor [280J]

Touch sensor [280K]

USB port [230]

Charging input

Charging management module [240]

Power management module [241]

Battery [242]

Ambient light sensor [280L]

Bone conduction sensor [280M]

FIG. 2

Obtain overall space usage of a hybrid SSD with a dynamic SLC capacity ⌐ S301

Adjust maximum available cache space of the hybrid SSD with the dynamic SLC capacity based on the overall space usage ⌐ S302

FIG. 3

Maximum available cache space

| Regular data storage space | Cached data storage space | Free space |

Overall used space

FIG. 4

$SLC\ capacity_{max}$

$SLC\ capacity_{min}$

0%  m1  m2  100%

FIG. 5

Electronic device

Memory
(601)

Hybrid SSD with a dynamic
SLC capacity
(602)

FIG. 6

Obtain overall space usage of a hybrid SSD with a dynamic SLC capacity — S701

Adjust, based on the overall space usage, a condition for storing a cache file in a flash memory cache of the hybrid SSD with the dynamic SLC capacity — S702

FIG. 7

Obtaining unit ~ 801

Processing unit ~ 802

FIG. 8

Obtaining unit ~ 901

Processing unit ~ 902

FIG. 9

## INTERNATIONAL SEARCH REPORT

| | International application No. |
|---|---|
| | **PCT/CN2022/119444** |

**A.     CLASSIFICATION OF SUBJECT MATTER**

G06F 3/06(2006.01)i

According to International Patent Classification (IPC) or to both national classification and IPC

**B.     FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 存储, 空间, 使用率, 利用率, 单层区域, 缓存, 最大, 大小, 调节, 调整, 磁盘, 硬盘, 固态闪存存储设备, 读写, SSD, storage, cache, space, utilization ratio, SLC, single level cell, buffer, maximum, size, adjust, disk, hard disk, IO, input and output

**C.     DOCUMENTS CONSIDERED TO BE RELEVANT**

| Category* | Citation of document, with indication, where appropriate, of the relevant passages | Relevant to claim No. |
|---|---|---|
| A | CN 111752489 A (CHONGQING UNISINSIGHT TECHNOLOGY CO., LTD.) 09 October 2020 (2020-10-09) description, paragraphs [0006]-[0016] | 1-15 |
| A | CN 108664219 A (SUZHOU HENGCHENG XINXING ELECTRONIC TECHNOLOGY CO. LTD.) 16 October 2018 (2018-10-16) entire document | 1-15 |
| A | CN 105677483 A (TCL CORP.) 15 June 2016 (2016-06-15) entire document | 1-15 |
| A | US 2019095109 A1 (INTERNATIONAL BUSINESS MACHINES CORP.) 28 March 2019 (2019-03-28) entire document | 1-15 |
| A | WO 2017000673 A1 (SANECHIPS TECHNOLOGY CO., LTD.) 05 January 2017 (2017-01-05) entire document | 1-15 |
| A | US 9811261 B1 (AMAZON TECHNOLOGIES, INC.) 07 November 2017 (2017-11-07) entire document | 1-15 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 November 2022** | **29 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/119444**

| Patent document cited in search report | | | Publication date (day/month/year) | Patent family member(s) | | | Publication date (day/month/year) |
|---|---|---|---|---|---|---|---|
| CN | 111752489 | A | 09 October 2020 | None | | | |
| CN | 108664219 | A | 16 October 2018 | None | | | |
| CN | 105677483 | A | 15 June 2016 | None | | | |
| US | 2019095109 | A1 | 28 March 2019 | None | | | |
| WO | 2017000673 | A1 | 05 January 2017 | CN | 106330770 | A | 11 January 2017 |
| US | 9811261 | B1 | 07 November 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   CN 202111236363